(19) Europäisches Patentamt

European Patent Office

Office européen des brevets

(11) **EP 0 797 387 B1**

(12) **FASCICULE DE BREVET EUROPEEN**

(45) Date de publication et mention
de la délivrance du brevet:
**11.08.1999 Bulletin 1999/32**

(21) Numéro de dépôt: **95943243.6**

(22) Date de dépôt: **18.12.1995**

(51) Int. Cl.$^6$: **A01N 59/16**, B09C 1/08
// (A01N59/16, 59:00, 37:16)

(86) Numéro de dépôt international:
**PCT/FR95/01690**

(87) Numéro de publication internationale:
**WO 96/18301 (20.06.1996 Gazette 1996/28)**

(54) **COMPOSITION AQUEUSE A BASE DE H2O2, ACIDES ET AG, PROCEDE DE PREPARATION ET UTILISATION DANS LE DOMAINE DE LA DESINFECTION, DE L'HYGIENE ET/OU DE LA DEPOLLUTION**

WÄSSRIGE LÖSUNG AUF BASIS VON H2O2, SÄUREN UND AG, VERFAHREN ZUR HERSTELLUNG UNDVERWENDUNG AUF DEM GEBIET DER DESINFEKTION, DER HYGIENE UND/ODER DER BESEITIGUNG VON VERSCHMUTZUNG

AQUEOUS COMPOSITION CONTAINING H2O2, ACIDS AND AG, PREPARATION METHOD THEREFOR AND USE THEREOF FOR DISINFECTION, HYGIENE AND/OR POLLUTION CONTROL

(84) Etats contractants désignés:
**AT BE CH DE DK ES FR GB GR IE IT LI LU MC NL PT SE**
Etats d'extension désignés:
**LT LV SI**

(30) Priorité: **16.12.1994 FR 9415193**

(43) Date de publication de la demande:
**01.10.1997 Bulletin 1997/40**

(73) Titulaire: **SODIFRA**
**92250 La-Garenne-Colombes (FR)**

(72) Inventeur: **ELHAIK, Alain**
**F-75008 Paris (FR)**

(74) Mandataire: **Clisci, Serge et al**
**S.A. FEDIT-LORIOT & AUTRES**
**CONSEILS EN PROPRIETE INDUSTRIELLE**
**38, Avenue Hoche**
**75008 Paris (FR)**

(56) Documents cités:
**WO-A-91/08981**          **WO-A-94/04167**
**DE-A- 4 112 933**          **GB-A- 2 189 394**
**GB-A- 2 257 630**          **US-A- 3 702 298**
**US-A- 4 314 966**          **US-A- 5 152 996**
**US-A- 5 171 454**

• **CHEMICAL ABSTRACTS, vol. 83, no. 15, 13 Octobre 1975 Columbus, Ohio, US; abstract no. 127104, K.IMAI ET AL.: "Effect of heavy metal ions on the growth and iron-oxidizing activity of Thiobacillus ferrooxidans" XP002001677 & AGRICOL.BIOL.CHEM., vol. 39, no. 7, 1975, pages 1349-1354,**
• **CHEMICAL ABSTRACTS, vol. 95, no. 20, 16 Novembre 1981 Columbus, Ohio, US; abstract no. 173205, C.L.BRIERLEY: "Effect of hydrogen peroxide on leach dump bacteria" XP002001678 & TRANS.AM.INST.MIN.,METALL.,PET.ENG.,SOC. MI N.ENG.AIME, vol. 266, 1979, pages 1860-1863,**

## Description

## DOMAINE DE L'INVENTION

La présente invention a trait à une composition aqueuse désinfectante et dépolluante à base de $H_2O_2$, acides et Ag, en tant que produit industriel nouveau.

Elle concerne également le procédé de préparation et l'utilisation de cette composition dans le domaine de la désinfection et/ou de l'hygiène, notamment pour désinfecter ou stériliser les locaux hospitaliers et industriels, les surfaces des divers matériaux. les réservoirs. les conduites, les récoltes, les aliments et l'eau de boisson, d'une part, et dans le domaine de la dépollution, notamment pour le contrôle de la pollution des industries minières (en particulier dans la prévention du drainage minier acide et la destruction des cyanures du sol), d'autre part.

## ART ANTERIEUR

Dans le domaine de la désinfection on connaît plusieurs solutions techniques faisant appel à $H_2O_2$ : les unes mettent en oeuvre une composition aqueuse contenant $H_2O_2$, un peroxyacide carboxylique ($RCO_3H$, où R est un groupe alkyle en $C_1$-$C_2$) et l'acide carboxylique ($RCO_2H$) correspondant, les autres mettent en oeuvre une composition aqueuse contenant $H_2O_2$ et de l'argent sous forme de sel ou de complexe.

Ainsi, on connaît de EP-A-0 370 850 une composition aqueuse comprenant $H_2O_2$ (6-8 % en poids par rapport au poids total de ladite composition), $CH_3CO_3H$ (0,1 à 1 % en poids) et $CH_3CO_2H$ (2 à 10 % en poids) en tant qu'agent d'hygiène pour la désinfection du matériel d'hémodialyse ; cette composition est susceptible d'être diluée avec de l'eau avant utilisation.

De EP-A-0 193 416 on connaît une composition aqueuse comprenant $H_2O_2$ (1 à 8% en poids), $CH_3CO_3H$ (0,005 à 0,1 % en poids)
et $CH_3CO_2H$ en quantité nécessaire pour atteindre l'équilibre du système selon la réaction suivante :

$$H_2O_2 + CH_3CO_2H \leftrightarrow CH_3CO_3H + H_2O \tag{1a}$$

pour aseptiser des lentilles cornéennes de contact.

De l'exemple unique de EP-B-0 087 343 (voir colonne 6 en haut) on connaît une composition aqueuse comprenant $H_2O_2$ (19,9 % en poids), $CH_3CO_3H$ (2 % en poids), $CH_3CO_2H$ (6,1 % en poids). $HNO_3$ (8,0 % en poids) intervenant en tant que moyen conservateur. acide hydroxyéthanedisphosphonique (0,3 % en poids) intervenant en tant qu'agent stabilisant et/ou agent anticorrosion et $H_2O$ (63,7 % en poids), cette composition étant présentée en tant que produit désinfectant moins corrosif vis-à-vis des métaux (notamment l'acier) que l'eau de Javel, d'une part, et l'acide $CH_3CO_3H$, d'autre part.

De FR-A-2 321 302 on connaît une composition aqueuse comprenant $H_2O_2$ (25-40 % en poids), $RCO_3H$ [et/ou $RCO_2H$] (0,5-20 % en poids), acide phosphonique (0,25-10 % en poids) et $H_2O$ (en complément jusqu'à 100 % en poids), en tant que produit microbicide, le rapport molaire $H_2O_2$/$RCO_3H$ étant supérieur ou égal à 2/1 et mieux compris entre 3/1 et 50/1. Le composant acide phosphonique, qui est présent dans la composition aqueuse selon FR-A-2 321 302, est un composé acide hydroxyalkylpolyphosphonique, acide aminoalkyl-polyphosphonique, acide polyaminoalkylène-polyphosphonique ou un sel de Na, K, ammonium ou $\omega$-hydroxyalkylammonium, ce composant acide phosphonique intervenant principalement en tant qu'agent anticorrosion.

On sait que la préparation d'un peroxyacide carboxylique met en oeuvre la réaction (1) :

$$H_2O_2 + RCO_2H \leftrightarrow RCO_3H + H_2O \tag{1}$$

et que pour stabiliser les solutions aqueuses concentrées en $RCO_3H$ il est recommandé, notamment par FR-A-2 309 531, FR-A-2 321 301 et EP-A-0 024 219, d'incorporer $H_2O_2$ dans lesdites compositions. En pratique quand on a un composé acide $RCO_3H$ en solution aqueuse, on obtient dans le temps une composition aqueuse comprenant un mélange de $H_2O_2$, $RCO_3H$ et $RCO_2H$, eu égard à la réaction d'équilibre (1) précitée.

D'un autre côté, de US-A-3 035 698 on connaît une composition aqueuse comprenant $H_2O_2$ et des ions $Ag^+$, en tant que produit désinfectant. Cependant, quand dans le mélange aqueux $H_2O_2 + Ag^+$ le peroxyde d'hydrogène est concentré, il existe un risque important d'explosion. Pour limiter ce risque, FR-A-2 597 347 envisage une technique de préparation mettant en oeuvre l'utilisation d'un acide minéral fort (notamment l'acide phosphorique, l'acide nitrique, l'acide bromhydrique, l'acide chlorhydrique, l'acide sulfurique ou l'acide borique) et d'un acide organique stabilisant (notamment l'acide tartrique, l'acide citrique, l'acide maléique, l'acide malonique, l'acide 6-acétamidohexanoïque, l'acide hippurique ou l'acide acétyloxybenzoïque).

Plus précisément, le procédé de préparation d'un concentré aqueux contenant $H_2O_2 + Ag^+$ comprend, selon

FR-A-2 597 347, les étapes suivantes :

- le mélange d'un acide minéral fort (pH < 1,6) avec un sel d'argent ou un complexe d'argent, à une température de 50-60°C, le rapport molaire acide minéral fort/composant argent étant supérieur ou égal à 1;
- le refroidissement du mélange résultant à une température de 25-30°C et l'ajout d'un acide organique stabilisant avec éventuellement de la gélatine ; et,
- l'incorporation de $H_2O_2$ dans le mélange résultant.

Il se trouve que les solutions techniques antérieures, qui mettent en oeuvre une composition aqueuse comprenant le mélange $H_2O_2$ + $RCO_3H$ + $RCO_2H$ ou le mélange $H_2O_2$ + $Ag^+$, ont un effet désinfectant (bactéricide, fongicide, virucide, algicide ou parasiticide) insuffisant. On a en particulier observé ce qui suit.

($\alpha$) Quand on projette par nébulisation des compositions aqueuses conformes auxdites solutions techniques antérieures dans des espaces clos contenant des souches néfastes ou indésirables, la différence entre le logarithme décimal de la concentration desdites souches à l'instant T = 0 et le logarithme décimal de la concentration des mêmes souches à l'instant T = 2h n'est pas toujours supérieure ou égale à 3 pour les moisissures ni supérieure ou égale à 4 pour les bactéries.
En d'autres termes, si $[S]_{T=0}$ est la concentration (nombre de germes par ml) d'une souche donnée à l'instant T = 0 et $[S]_{T=2h}$ celle de la même souche à l'instant T = 2h après exposition de 2 h à une composition aqueuse nébulisée, les solutions techniques antérieures conduisent à un résultat ($\Delta R$) donné par la relation

$$\Delta R = \log_{10}([S]_{T=0}) - \log_{10}([S]_{T=2\,h}) \qquad (2)$$

tel que, bien souvent,

$\Delta R \leq 3$ pour les moisissures, et
$\Delta R \leq 4$ pour les bactéries.

($\beta$) Il existe des souches, notamment des souches de **Penicillium verrucosum**, qui résistent aux compositions aqueuses des solutions techniques antérieures comprenant un mélange $H_2O_2$ + $RCO_3H$ (notamment $CH_3CO_3H$) + $RCO_2H$ (notamment $CH_3CO_2H$) ou un mélange $H_2O_2$ + $Ag^+$.

En ce qui concerne la dépollution, il convient de remarquer que l'industrie minière doit faire face à deux grands problèmes environnementaux : (i) la lixiviation (solubilisation) des métaux contenus dans les sols, due au drainage acide et générale à tous types de mine, et (ii) la contamination des sols par les cyanures provenant en particulier de la technique d'extraction de l'or dans les mines et installations aurifères.
De nombreux minéraux et métaux présents dans les sols miniers. comme l'arsenic, le sélénium et l'aluminium peuvent être solubilisés et se retrouver dans les eaux souterraines et l'environnement du fait du drainage acide. Le drainage acide des roches est le résultat d'une oxydation naturelle des minerais sulfurés suite à leur exposition à l'air et l'eau. Ces réactions d'oxydation sont souvent accélérées par certains microorganismes. Les réactions chimiques et biologiques provoquent une diminution du pH de l'eau, qui a alors la propriété de mobiliser tout métal lourd qui peut être présent dans les résidus rocheux. Si suffisamment d'eau est disponible, elle jouera le rôle de moyen de transport, et le drainage résultant pourra contenir les produits du procédé de génération d'acide, typiquement des quantités appréciables de Al, Ca, Si, Mg, Na, K, Fe, d'autres métaux et de sulfates. Ce phénomène cause un impact néfaste sur la qualité de l'eau s'infiltrant dans l'environnement. A titre d'exemple, les minerais sulfurés étant présents dans tout le bouclier canadien et dans les mines de charbon, la lixiviation des métaux est un problème très répandu dans les industries minières du Canada.
La génération d'acide est le résultat d'un procédé complexe faisant intervenir un grand nombre de réactions chimiques. Ces réactions peuvent être illustrées simplement par l'exemple qui suit de l'oxydation de la pyrite ($FeS_2$), qui est un des minerais sulfurés les plus communs.
La première réaction importante est l'oxydation du minerais sulfuré en fer ferreux, en ions sulfate et en hydrogène ($H^+$) :

$$FeS_2 + 7/2\ O_2 + H_2O \rightarrow Fe^{2+} + 2\ SO_4^{2-} + 2\ H^+ \qquad (2)$$

Le fer dissous, les sulfates et l'hydrogène provoquent une augmentation de la concentration en solides dissous totaux et une augmentation de l'acidité de l'eau. L'accroissement de l'acidité est associé à une baisse de pH. Si l'environnement avoisinant est suffisamment oxydant, la plupart du fer ferreux sera oxydé en fer ferrique ($Fe^{3+}$) :

$$Fe^{2+} + 1/4\ O_2 + H^+ \rightarrow Fe^{3+} + 1/2\ H_2O \qquad (3)$$

A faible pH, le fer ferrique va précipiter sous forme de $Fe(OH)_3$, laissant peu de $Fe^{3+}$ en solution et diminuant en même temps le pH :

$$Fe^{3+} + 3\ H_2O \rightarrow Fe(OH)_3\ (solide) + 3H^+ \qquad (4)$$

Tout ion $Fe^{3+}$ formé à la réaction 3 qui n'a pas précipité lors de la réaction 4 peut être utilisé pour oxyder plus de pyrite :

$$FeS_2 + 14\ Fe^{3+} + 8\ H_2O \rightarrow 15\ Fe^{2+} + 2\ SO_4^{2-} + 16\ H^+ \qquad (5)$$

Fondée sur ces réactions simplifiées, la génération d'acide, où des ions ferriques sont formés et par la suite précipités en $Fe(OH)_3$, peut être résumée par la combinaison des réactions 2, 3 et 4 :

$$FeS_2 + 15/4\ O_2 + 7/2H_2O \rightarrow Fe(OH)_3 + 2SO_4^{2-} + 4\ H^+ \qquad (6)$$

Il se trouve que certaines bactéries peuvent accélérer plusieurs des réactions 2-5 jusqu'à augmenter de 5 fois la vitesse de génération d'acide. Parmi ces bactéries les souches de *Thiobacillus ferrooxidans* sont connues pour accélérer les réactions 2, 3 et 5. On sait que le *Thiobacillus ferrooxidans* est surtout impliqué dans l'oxydation de la pyrite, et qu'il est capable d'accélérer l'oxydation des sulfures d'As, Cu, Cd, Co, Ni, Sb, Mo, Pb et Zn et par suite d'augmenter la vitesse ou le taux de solubilisation de ces métaux. Ainsi, la présence d'arsenic oxydé ($AsO_4^{3-}$) dans l'environnement est due à la solubilisation de minerais sulfurés tels que l'arsénopyrite, le réalgar, l'orpiment, la cobalite et la niccolite. Il existe donc un besoin de prévenir ou empêcher la génération d'acide (et donc la lixiviation de métaux et la formation de sulfates) en agissant sur les bactéries impliquées dans l'oxydation des sulfures, telles que le *Thiobacillus ferrooxidans*.

De plus dans les procédés d'extraction des métaux tels que l'or, le relargage de cyanures toxiques dans les résidus miniers et les eaux usées constitue un problème environnemental majeur. Les eaux usées peuvent être épurées par oxydation chimique des cyanures, qu'elles contiennent, au moyen d'un agent oxydant tel que $H_2O_2$ ou $SO_2$. En revanche rien n'est fait à l'heure actuelle pour traiter les sols contenant des cyanures, on se contente dans l'industrie minière de l'or de détruire les cyanures par des mécanismes d'oxydation naturelle par l'air. Il existe donc dans ce domaine un besoin pressant de dépolluer les sols contenant des cyanures.

## BUT DE L'INVENTION

Selon un premier aspect de l'invention, on se propose de fournir une nouvelle solution technique permettant de pallier aux inconvénients précités des solutions techniques antérieures. Cette nouvelle solution technique fait appel à une composition aqueuse comprenant un mélange $H_2O_2$ + $RCO_3H$ + $RCO_2H$ + $Ag^+$, ledit mélange permettant d'obtenir notamment par nébulisation dans une enceinte close une valeur $\Delta R$ supérieure à 3 pour les moisissures et supérieure à 4 pour les bactéries, après 2 h d'exposition.

Selon un second aspect de l'invention, on se propose de fournir, selon ladite solution technique, une composition aqueuse décontaminante (i.e. désinfectante et/ou dépolluante) comprenant un mélange de $H_2O_2$, $RCO_3H$ (où R est éthyle ou mieux méthyle), $RCO_2H$ (où R est défini comme indiqué ci-dessus), Ag (sous forme de sel ou de complexe, en tant que source d'ions $Ag^+$) et $H_3PO_4$, dans laquelle les quatre composants peroxyde d'hydrogène, peroxyacide carboxylique, acide carboxylique correspondant audit peroxyacide carboxylique et $Ag^+$ présentent une synergie en ce qui concerne les propriétés désinfectantes et dépolluantes.

Selon un troisième aspect de l'invention, on se propose de fournir un procédé pour la préparation de ladite composition aqueuse décontaminante.

Selon encore un autre aspect de l'invention, on se propose d'utiliser ladite composition aqueuse décontaminante pour (i) désinfecter et/ou « stériliser à froid » notamment ou à la température ambiante (10-25°C) les enceintes closes (les locaux hospitaliers, agricoles, industriels, ménagers ou de transport), les surfaces de divers matériaux, les instruments, les réservoirs, les conduites de liquide, les aliments et l'eau de boisson, et (ii) dépolluer les sites miniers en vue de prévenir la génération d'acide et/ou de détruire (par oxydation) les cyanures.

## OBJET DE L'INVENTION

Conformément à la nouvelle solution technique de l'invention, on préconise une composition aqueuse décontaminante, ladite composition, qui contient en milieu acide $H_2O_2$ et un composant d'argent, étant caractérisée en ce qu'elle comprend :

(A) une quantité inférieure ou égale à 60 % en poids de $H_2O_2$ par rapport au poids total de ladite composition ;

(B) un mélange $RCO_3H/RCO_2H$ où R est méthyle ou éthyle, ledit mélange intervenant selon une quantité telle que le rapport pondéral dudit mélange au peroxyde d'hydrogène soit compris entre 0,15/1 et 0,85/1 ;

(C) un composant d'argent, en tant que source d'ions $Ag^+$, choisi parmi l'ensemble constitué par les sels et complexes d'argent, ledit composant d'argent intervenant selon une quantité telle que le rapport pondéral dudit composant d'argent au peroxyde d'hydrogène soit compris entre 0,0005/1 et 0,015/1 ;

(D) un agent stabilisant intervenant selon une quantité telle que le rapport pondéral dudit agent stabilisant au peroxyde d'hydrogène soit compris entre 0,0005/1 et 0,025/1; et,

de l'eau en complément jusqu'à 100% en poids.

Le procédé de préparation de ladite composition aqueuse décontaminante selon l'invention est caractérisé en ce qu'il comprend les étapes consistant à

(1°) préparer une solution aqueuse du composant d'argent, qui intervient comme source d'ions $Ag^+$ ;

(2°) introduire dans ladite solution résultante, ainsi obtenue, l'agent stabilisant ;

(3°) introduire ladite solution résultante, ainsi obtenue, dans l'eau oxygénée ou introduire l'eau oxygénée dans ladite solution résultante ;

(4°) introduire dans ladite solution résultante, ainsi obtenue, une substance acide choisie parmi l'ensemble constitué par $RCO_3H$, $RCO_2H$ et leurs mélanges $RCO_3H + RCO_2H$ ;

(5°) laisser reposer ladite solution résultante, ainsi obtenue, jusqu'à ce que l'équilibre

$$H_2O_2 + RCO_2H \leftrightarrow RCO_3H + H_2O$$

soit établi ; et,

(6°) compléter jusqu'à 100% en poids avec de l'eau.

L'utilisation de la composition aqueuse décontaminante selon l'invention, en tant que produit désinfectant, comprend

(i) un traitement en surface ou en volume du produit à désinfecter ou décontaminer à une température comprise entre 0°C et 50°C, de préférence à la température ambiante (RT) dans la plage de 10°C à 25°C, avec ladite composition aqueuse désinfectante éventuellement diluée, puis

(ii) le séchage dudit produit ainsi traité.

L'utilisation de ladite composition aqueuse, en tant produit dépolluant, comprend l'étape (i) ci-dessus, le séchage de l'étape (ii) s'effectuant de lui-même à la température ambiante.

Le produit à désinfecter comprend notamment les enceintes closes (en particulier les locaux hospitaliers, agricoles et industriels), les surfaces de divers matériaux, les instruments, les réservoirs, les conduites (notamment les conduites de liquides aqueux tels que eau, lait, bière, jus de fruit), les aliments, les récoltes, les cultures de plein champ ou de serre et l'eau de boisson.

Le produit à dépolluer comprend notamment les sols et terrils de l'industrie minière.

**DESCRIPTION DETAILLEE DE L'INVENTION**

Dans ce qui suit, sauf indications contraires, les quantités respectives des ingrédients de la composition aqueuse décontaminante selon l'invention sont exprimées en % en poids, et les dilutions de ladite composition sont exprimées selon le rapport volume initial/volume de la composition diluée résultante.

D'une manière générale la composition aqueuse décontaminante selon l'invention contient une teneur en $H_2O_2$ qui est inférieure ou égale à 60 % en poids par rapport au poids de ladite composition. Pour ladite composition aqueuse, la dose antibactérienne la plus faible qui a été testée est celle qui correspond à une dilution finale de $5/10^7$ (contenant 0.000025 % en poids de $H_2O_2$);

à cette dose la composition selon l'invention fournit (dans le domaine de la balnéothérapie) une protection antibactérienne pendant au moins 48 h.

En conséquence, dans sa plus grande généralité, la présente invention préconise une composition comprenant 0,1 à 60 % en poids de $H_2O_2$ et qui peut être diluée le moment venu lors de l'emploi.

Le peroxyde d'hydrogène soulève des difficultés sur le plan du transport, quand on fait appel à de l'eau oxygénée ayant une forte teneur en $H_2O_2$, par exemple une teneur en $H_2O_2$ supérieure à 16% ou à 8% en poids en fonction des réglementations de plusieurs états. Si d'un point de vue pratique on a intérêt à utiliser comme matière première une eau oxygénée contenant 50 à 70 % en poids de $H_2O_2$, il est plutôt préférable que la composition aqueuse désinfectante selon l'invention ait une teneur inférieure ou égale à 8 % en poids de $H_2O_2$, afin d'éviter des conditionnements spéciaux avec évent, conformes aux réglementations nationales contraignantes en matière de transport et qui nécessitent un personnel qualifié au niveau de l'utilisation.

De façon pratique, la composition aqueuse décontaminante selon l'invention comprendra une teneur en $H_2O_2$ de l'ordre de 7,5-8 % en poids et sera diluée, au moment de l'emploi, avec de l'eau jusqu'à notamment une concentration finale en $H_2O_2$ comprise entre 0,0000025 et 4 % en poids.

En variante, il est possible de commercialiser une composition aqueuse désinfectante ou dépolluante prédiluée éventuellement, qui est stabilisée et contient 1,5 à 8 % en poids de $H_2O_2$, prête à l'emploi pour l'utilisateur et conservant son efficacité pendant au moins deux ans.

De façon pratique, la composition aqueuse décontaminante selon l'invention renfermera avantageusement 7,5 à 8 % en poids de $H_2O_2$ et sera, le cas échéant, diluée avec $H_2O$ par l'utilisateur.

Les quantités respectives de $RCO_3H$ et $RCO_2H$ dans le mélange $RCO_3H/RCO_2H$ ne sont pas critiques. Eu égard à la réaction d'équilibre (1) ci-dessus, il suffit d'avoir en contact dans $H_2O$ soit $H_2O_2$ et $RCO_3H$ soit $H_2O_2$ et $RCO_2H$ pour obtenir un mélange ternaire $H_2O_2 + RCO_3H + RCO_2H$ dès lors que $H_2O_2$ est en excès par rapport au couple $RCO_3H/ RCO_2H$. Aussi il suffit en quelque sorte d'incorporer

(i) $RCO_2H$ en présence de $H_2O_2$, ou
(ii) $RCO_3H$ (qui à l'état concentré contient généralement $H_2O_2$ et $RCO_2H$ selon les documents FR-A-2 321 301 et FR-A-2 321 302 précités),

dans $H_2O$, pour obtenir à l'équilibre l'ensemble $H_2O_2 + RCO_3H + RCO_2H$.

Dans la composition aqueuse décontaminante selon l'invention, le rapport pondéral du mélange $RCO_3H/RCO_2H$ au peroxyde d'hydrogène est compris entre 0,15/1 et 0,85/1. En pratique ce rapport pondéral sera avantageusement compris entre 0,5/1 et 0,7/1.

D'une manière générale, on préfère le couple $CH_3CO_3H/CH_3CO_2H$ (i.e. R = méthyle) au couple $CH_3CH_2CO_3H/CH_3CH_2CO_2H$ (i.e. R = éthyle) dès lors que le premier couple est plus actif que le second en tant que moyen désinfectant/dépolluant dans la composition aqueuse selon l'invention.

Le composant d'argent que l'on préconise sera, selon un ordre de préférence croissant, un complexe d'argent, un sel d'argent avec un acide organique (notamment $CH_3CO_2Ag$) ou un sel d'argent avec un acide minéral (notamment $Ag_2SO_4$ et mieux $AgNO_3$).

Les oxydes d'argent $Ag_2O$ et $AgO$ ne conviennent pas en ce sens qu'ils ne sont pas hydrosolubles. Si on utilisait $Ag_2O$ et/ou $AgO$, il faudrait d'abord les solubiliser au moyen d'une quantité relativement importante d'une base forte (NaOH ou KOH) puis augmenter les quantités initiales du mélange $RCO_3H/ RCO_2H$ (composant B ci-dessus), d'une part, et celles du stabilisant acide (composant D ci-dessus), d'autre part, afin de ($\alpha$) neutraliser la base forte et ($\beta$) avoir les quantités requises des composants B et D dans la composition aqueuse décontaminante.

Dans la composition aqueuse décontaminante selon l'invention, le rapport pondéral du composant d'argent au peroxyde d'hydrogène est compris entre 0,0005/1 et 0,015/1. De façon pratique, ce rapport pondéral sera avantageusement compris entre 0,0008/1 et 0,005/1 et mieux de l'ordre de 0,001/1.

L'agent stabilisant, qui intervient pour (i) protéger $H_2O_2$ et les ions $Ag^+$ lors de la préparation de la composition aqueuse décontaminante selon l'invention et éviter tout risque d'explosion, notamment à partir de solutions concentrées en $H_2O_2$ et $Ag^+$, et (ii) conserver les concentrations requises entre $H_2O_2$, $CH_3CO_3H$ et $Ag^+$ dans ladite composition jusqu'au moment de l'emploi, est choisi parmi l'ensemble constitué par les acides minéraux et organiques. Parmi ces acides les plus efficaces sont les acides minéraux forts, le plus intéressant étant ici $H_3PO_4$ qui est tout particulièrement préféré.

Dans la composition aqueuse décontaminante selon l'invention, le rapport pondéral de l'agent stabilisant au peroxyde d'hydrogène est compris entre 0,0005/1 et 0,025/1. De façon pratique, ce rapport pondéral sera avantageusement compris entre 0,0008/1 et 0,005/1 et mieux de l'ordre 0,001/1.

Selon l'invention, l'on recommande de façon avantageuse d'utiliser une quantité d'agent stabilisant sensiblement identique ou légèrement supérieure à celle du composant d'argent.

La composition aqueuse désinfectante selon l'invention peut en outre contenir au moins un des composants choisis parmi l'ensemble constitué par les

(E) agent tensioactif ;
(F) agent anticorrosion ; et, (G) parfum.

L'agent tensioactif qui intervient ici est (i) un composé tensioactif ionique ou non-ionique convenant en particulier pour contact alimentaire et le cas échéant convenant pour administration orale avec l'eau de boisson à la dose considérée d'utilisation, ou (ii) un mélange de tels composés.

Parmi les produits qui conviennent à cet effet, on peut notamment mentionner les alkylbenzènesulfonates, alkylsulfates et alcanesulfonates de métaux alcalino-terreux et (de préférence) de métaux alcalins (en particulier Na ou K), ainsi que les esters alkyliques de l'acide phosphorique polyoxyéthylénés et leurs mélanges.

Dans la composition aqueuse décontaminante selon l'invention, le rapport pondéral de l'agent tensioactif au peroxyde d'hydrogène est compris entre 0,00005/1 et 0,01/1. De façon pratique, ce rapport pondéral sera avantageusement de l'ordre de 0,005/1.

Il est recommandé d'incorporer dans la composition aqueuse décontaminante selon l'invention un agent anticorrosion qui, à la dose utilisée, convient pour contact alimentaire et/ou administration orale avec l'eau de boisson. En tant qu'agent anticorrosion utilisable à cet effet, on peut signaler notamment les acides aminophosphoniques décrits dans FR-A-2 321 302 précité; leurs sels de sodium, de potassium, d'ammonium et d'alkanolamine et leurs mélanges. Sont particulièrement adaptés à la composition aqueuse décontaminante selon l'invention les acides hydroxyéthanedisphosphonique, diméthylaminométhanedisphosphonique, éthylènediamino-tétrakis(méthylène phosphonique), leurs sels de Na, K, $NH_4^+$ ou alcanolamine et leurs mélanges. Convient également en tant qu'agent anticorrosion le 1,2,3-benzotriazole.

En pratique l'agent anticorrosion sera présent dans la composition aqueuse décontaminante selon l'invention à une concentration faible. Quand il est présent, ledit agent anticorrosion interviendra notamment selon une quantité telle que le rapport pondéral dudit agent anticorrosion au peroxyde d'hydrogène soit compris entre 0,00005/1 et 0,03/1, et de préférence entre 0,001/1 et 0,005/1. Comme la composition aqueuse décontaminante selon l'invention renferme des substances acides corrosives, à savoir $RCO_3H$, $RCO_2H$ et le composant acide stabilisant du point D ($H_3PO_4$), il est important de limiter la corrosion de telle façon que la vitesse de corrosion d'articles en acier ou en cuivre soumis à 200 cycles d'immersion dans la composition aqueuse décontaminante selon l'invention puis séchage (sans rinçage) ou à 200 cycles de nébulisation avec ladite composition puis séchage à 15-35° C (étuve ou courant d'air purifié ; sans rinçage à l'eau) soit inférieur à 50 μm/an.

En effet, comme la corrosion des surfaces métalliques se traduit principalement par un phénomène dit de "piqûres", il est essentiel d'éviter la formation desdites piqûres où se logeraient et se développeraient les germes que l'on veut éradiquer.

Le composant parfum du point (G) interviendra dans la composition aqueuse décontaminante selon une quantité inférieure ou égale à celle de l'agent anticorrosion du point (F).

L'eau qui entre dans la composition décontaminante selon l'invention est avantageusement une eau purifiée, à savoir de l'eau distillée, de l'eau déminéralisée ou mieux de l'eau désionisée. De façon préférée, l'eau désionisée sera ici une eau ayant une résistivité supérieure à $10^5$ Ω/cm et mieux supérieure à $10^6$ Ω/cm.

L'eau utilisée pour les éventuelles dilutions de ladite composition décontaminante selon l'invention sera avantageusement de l'eau purifiée comme indiqué ci-dessus.

Le pH de la composition aqueuse selon l'invention est (avant utilisation) en général compris entre 1,5 et 4. Il est régulé au moyen du composant D préféré $H_3PO_4$.

On préconise en particulier une composition aqueuse décontaminante qui comprend

(A) 1,5 à 8% en poids de $H_2O_2$ ;
(B) 0,75 à 5,6 % en poids d'un mélange de $RCO_3H$ et de $RCO_2H$ où R est éthyle ou mieux méthyle ;
(C) 0,0012 à 0,04 % en poids d'un composant d'argent choisi parmi les complexes et les sels d'argent en tant que source d'ions $Ag^+$ ;
(D) 0,0012 à 0,04 % en poids de $H_3PO_4$ ;
(E) le cas échéant 0,0075 à 0,04 % en poids d'agent tensioactif ;
(F) le cas échéant 0,003 à 0,04 % en poids d'agent anticorrosion ;
(G) le cas échéant un parfum ; et, de l'eau (distillée, déminéralisée ou désionisée) en complément jusqu'à 100 % en poids.

On préconise plus particulièrement une solution mère ayant une teneur en $H_2O_2$ de l'ordre de 7,5-8 % en poids. Cette solution mère renferme

(A) 7,5-8 % en poids de $H_2O_2$ ;
(B) 4,5 à 4,8 % en poids d'un mélange $CH_3CO_3H + CH_3CO_2H$ ;
(C) 0,008 % en poids de $AgNO_3$ ;
(D) 0,008 % en poids de $H_3PO_4$ ; et,

de l'eau (distillée, déminéralisée ou désionisée) en complément jusqu'à 100 % en poids.

Ladite solution mère est ensuite utilisée

- soit telle quelle ou diluée avec de l'eau purifiée jusqu'à une teneur en $H_2O_2$ de 1,5 à 4 % en poids ;
- soit complétée en composants (E), (F) et /ou (G), puis si nécessaire diluée avec de l'eau purifiée jusqu'à une teneur en $H_2O_2$ de 1,5 à 4 % en poids ;
- soit complétée en mélange (B) $CH_3CO_3H + CH_3CO_2H$ jusqu'à ce que ledit mélange soit à une teneur dans la composition aqueuse décontaminante de 5,6 % en poids, la composition résultante étant ensuite, si nécessaire, diluée avec de l'eau purifiée comme indiqué ci-dessus ;
- soit complétée en mélange (B), d'une part, et en composants (E), (F) et/ou (G), d'autre part, puis le cas échéant diluée avec de l'eau comme indiqué ci-dessus.

Lors de la mise en oeuvre du procédé de préparation visé ci-dessus dans le chapitre "objet de l'invention", les étapes (1°) et surtout (2°) à (4°) et (6°) sont réalisées sous agitation. En pratique, les étapes (3°) et (4°) sont effectuées à une température inférieure ou égale à 30° C, et de préférence à une température inférieure ou égale à 25° C ; et l'étape (2°) est réalisée à une température inférieure ou égale à 60° C.

A l'étape (1°), la source d'ions $Ag^+$ sera de préférence $AgNO_3$. A l'étape (2°), on pourra utiliser comme agent stabilisant une solution aqueuse concentrée d'acide phosphorique , en particulier une solution du commerce contenant 85 % en poids de $H_3PO_4$.

A l'étape (3°), l'on fait appel à de l'eau oxygénée ayant une teneur en $H_2O_2$ supérieure à 8 % en poids et inférieure ou égale à 70 % en poids ; on introduit soit la solution obtenue à l'étape (2°) dans ladite eau oxygénée, soit ladite eau oxygénée dans la solution obtenue à l'étape (2°), chacune de ces introductions est faite lentement (notamment à raison de 1 à 5 litres de solution introduite en 20-60 minutes) sous agitation et en refroidissant à une température inférieure ou égale à 30° C et de préférence à une température inférieure ou égale à 25° C.

A l'étape (4°) on introduit la substance acide ($RCO_3H$, $RCO_2H$ ou le mélange $RCO_3H + RCO_2H$) dans la solution obtenue à l'issue de l'étape (3°), dans les mêmes conditions qu'à ladite étape (3°) en ce qui concerne la vitesse d'introduction, la température et l'agitation.

A l'étape (5°) on laisse reposer la solution obtenue à l'issue de l'étape (4°), à une température inférieure ou égale à 30°C et de préférence à une température inférieure ou égale à 25°C, pendant 48 h environ pour que l'équilibre de l'équation (1) s'établisse. De façon avantageuse, l'étape (5°) est réalisée à l'obscurité.

Comme indiqué ci-dessus l'eau utilisée pour la préparation de la composition aqueuse décontaminante selon l'invention, notamment aux étapes (1°) et (6°), est de l'eau purifiée, c'est-à-dire de l'eau distillée, déminéralisée ou désionisée.

Les composants (E), (F) et/ou (G) sont introduits de façon appropriée depuis la mise en oeuvre de l'étape (1°) jusqu'à la mise en oeuvre de l'étape (6°). En variante, chacun de ces ingrédients peut être incorporé à l'issue de l'étape (6°).

Pour la préparation de la solution mère précitée, contenant 7,5-8 % en poids de $H_2O_2$, on met en oeuvre un procédé particulier qui comprend les étapes consistant à :

(1°) préparer une solution de $AgNO_3$ dans une portion de la quantité d'eau totale requise pour réaliser ladite composition aqueuse désinfectante ;

(2°) introduire dans la solution résultante ainsi obtenue une solution aqueuse d'acide phosphorique contenant 85 % en poids de $H_3PO_4$ ;

(3°) introduire la solution résultante, ainsi obtenue dans une solution aqueuse de peroxyde d'hydrogène contenant 50 à 60 % en poids de $H_2O_2$, sous agitation, à une température comprise entre 0°C et 25°C et mieux à une température comprise entre 4°C et 15°C , et avec un débit d'introduction de la solution obtenue à l'étape (2°) compris entre 3 et 6 l/h ;

(4°) introduire dans la solution résultante, ainsi obtenue, la substance acide $CH_3CO_2H$, sous agitation, à une température comprise entre 0°C et 25°C et mieux à une température comprise entre 4°C et 15°C, et avec un débit d'introduction de la substance acide $CH_3CO_2H$ compris entre 3 et 6 l/h ;

(5°) laisser reposer la solution résultante, ainsi obtenue, pendant 48 h, à l'obscurité à une température comprise entre 0°C et 25°C et mieux à une température comprise entre 4°C et 15°C, pour que l'équilibre

$$H_2O_2 + CH_3CO_2H \leftrightarrow CH_3CO_3H + H_2O$$

s'établisse, et,

(6°) ajouter l'eau restante pour compléter jusqu'à 100% en poids.

A l'étape (4°) de la préparation de la composition mère. l'acide peut être introduit sous forme de solution aqueuse.

Quand d'une manière générale la composition aqueuse décontaminante selon l'invention intervient en tant que composition désinfectante, elle est utilisée (i) telle qu'elle est préparée, ou (ii) à raison d'au moins 5 ml de ladite composition pour un volume de 1 $m^3$ ou une surface de 1 $m^2$ à traiter, ladite composition étant le cas échéant diluée.

En ce qui concerne l'utilisation désinfectante de la composition aqueuse selon l'invention, on préconise plus particulièrement :

($\alpha$) l'immersion du produit à traiter (qui a été de façon avantageuse préalablement lavé) dans une composition aqueuse décontaminante contenant 1,5 à 4% en poids de $H_2O_2$ ;

($\beta$) la nébulisation sur une surface à traiter (c'est le cas des cultures de plein champ) d'une composition aqueuse désinfectante contenant 2 à 4 % en poids de $H_2O_2$, à raison de 5 à 20 litres de ladite composition par hectare ;

($\gamma$) la nébulisation sur un volume à traiter (c'est le cas des récoltes alimentaires en silo) d'une composition aqueuse désinfectante contenant 2 à 8 % en poids de $H_2O_2$, à raison de 0,5 à 4 litres de ladite composition par $m^3$ ; ou,

($\delta$) l'incorporation dans l'eau à traiter (c'est notamment le cas de l'eau des piscines ou de l'eau de boisson) d'une composition aqueuse désinfectante contenant 16 à 50 % en poids de $H_2O_2$, à raison de 5 à 150 ml de ladite composition pour 1 $m^3$ d'eau à traiter (les 5 à 150 ml correspondent à une concentration finale d'utilisation de 0,00008% en poids à 0,0075% en poids de $H_2O_2$) ; en particulier, pour la désinfection de l'eau de boisson, on utilisera environ 20 ml/$m^3$ (soit une concentration finale d'utilisation de l'ordre de 0,001% en poids de $H_2O_2$).

La composition aqueuse désinfectante selon l'invention est notamment utile pour :

(a) la désinfection et l'hygiène des locaux hospitaliers et des locaux industriels (laiteries, fromageries, malteries, brasseries, serres, étables, poulaillers, écuries, chaînes de conditionnements d'aliments, de boissons ou de médicaments, intérieurs d'avions et de bateaux) et du contenu desdits locaux, notamment le matériel ou les instruments équipant ou utilisés dans lesdits locaux ;

(b) la désinfection et l'hygiène des réservoirs (notamment les silos) et conduites destinés à recevoir des produits liquides ou solides tels que les denrées alimentaires (sucre, thé, café, céréales, boissons);

(c) la désinfection et l'hygiène des piscines et du contenu des réservoirs et conduites précités ;

(d) la désinfection de l'eau de boisson ; ou,

(e) la protection des cultures de plein champ (céréales, tomates, forêts, bananeraies, vergers, etc.) ;

eu égard à ses propriétés bactéricides, fongicides, sporicides, virucides et antiparasitaires.

Quand elle intervient en tant que composition dépolluante, la composition selon l'invention est utilisée soit par nébulisation sur le volume à traiter ou sur une surface dudit volume, soit encore par brassage.

De façon pratique, on partira d'une composition qui, telle la composition mère précitée, contiendra 7,5 à 8 % en poids de $H_2O_2$ et qui sera diluée avant emploi jusqu'à une dilution finale d'utilisation inférieure à 1/100 (de préférence une dilution de 5/1000 à 5/10 000, et mieux de 1/1000).

La composition dépolluante selon l'invention est principalement efficace dans les sites miniers, notamment pour supprimer ou réduire substantiellement (i) la génération d'acide (en particulier de minerais sulfurés) et (ii) les cyanures (en particulier dans le cas des mines d'or et des installations d'extraction d'or).

*Meilleur mode*

Le meilleur mode de mise en oeuvre de l'invention consiste à faire appel à une composition mère contenant comme indiqué ci-dessus :

(A) 7,5-8 % en poids de $H_2O_2$;

(B) 4,5 à 4,8 % en poids d'un mélange $CH_3CO_3H$ + $CH_3CO_2H$ ;

(C) 0,008 % en poids de $AgNO_3$ ;

(D) 0,008 % en poids de $H_3PO_4$ ; et,

de l'eau distillée, déminéralisée ou désionisée en complément jusqu'à 100 % en poids.

Cette composition mère est ensuite complétée avec les composants (E), (F) et/ou (G) précités et, le cas échéant, les composants (B), (C) ou (D).

D'autres avantages et caractéristiques de l'invention seront mieux compris à la lecture qui va suivre de la description d'exemples de réalisation et d'essais comparatifs. Bien entendu l'ensemble de ces éléments n'est nullement limitatif mais est donné à titre d'illustration.

Dans ces essais, les souches "IP", qui ont été utilisées, sont celles qui ont été fournies par la Collection Nationale de Cultures de Microorganismes (CNCM) gérée par l'Institut Pasteur à Paris.

*Exemples 1-5*

On a consigné dans les tableaux Ia (couple $CH_3CO_2H/CH_3CO_3H$) et Ib (couple $EtCO_2H/EtCO_3H$) ci-après les formulations des exemples (Ex 1- Ex 5) selon l'invention, des exemples comparatifs conformes à l'art antérieur sans composant d'argent (A1-A5) ou sans mélange $RCO_3H/RCO_2H$ (B1-B5), la composition B4 du tableau Ib étant identique à celle de la composition B1 du tableau Ia, et l'eau présente dans ces formulations (non mentionnée dans lesdits tableaux Ia et Ib) représentant le complément jusqu'à 100% en poids.

TABLEAU Ia

| Formulations (% en poids) des ingrédients autres que l'eau | | | | | | |
|---|---|---|---|---|---|---|
| PRODUIT | $H_2O_2$ | MELANGE $CH_3CO_2H$ + $CH_3CO_3H$ | $AgNO_3$ | $H_3PO_4$ | agent tensioactif(a) | agent anti-corrosion (b) |
| Ex 1 | 8 | 4,8 | 0,008 | 0,008 | 0,04 | 0,032 |
| A1 | 8 | 4,8 | | 0,008 | 0,04 | 0,032 |
| B1 | 8 | - | 0,008 | 0,008 | 0,04 | 0,032 |
| Ex 2 | 8 | 5,6 | 0,005 | 0,005 | 0,04 | 0,032 |
| A2 | 8 | 5,6 | - | 0,005 | 0,04 | 0,032 |
| B2 | 8 | - | 0,005 | 0,005 | 0,04 | 0,032 |
| Ex 3 | 7,75 | 4,5 | 0,002 | 0,004 | 0,02 | 0,02 |
| A3 | 7,75 | 4,5 | - | 0,004 | 0,02 | 0,02 |
| B3 | 7,75 | - | 0,002 | 0,004 | 0,02 | 0,02 |
| Notes : voir tableau Ib | | | | | | |

TABLEAU Ib

| Formulations (% en poids) des ingrédients autres que l'eau | | | | | | |
|---|---|---|---|---|---|---|
| PRODUIT | $H_2O_2$ | MELANGE $EtCO_2H$ + $EtCO_3H$ | $AgNO_3$ | $H_3PO_4$ | agent tensioactif (a) | agent anticorrosion (b) |
| Ex 4 | 8 | 4,8 | 0,008 | 0,008 | 0,04 | 0,032 |
| A4 | 8 | 4,8 | - | 0,008 | 0,04 | 0,032 |
| B4(c) | 8 | - | 0,008 | 0,008 | 0,04 | 0,032 |
| Ex 5 | 8 | 5,6 | 0,01 | 0,01 | 0,04 | 0,032 |
| A5 | 8 | 5,6 | - | 0,01 | 0,04 | 0,032 |
| B5 | 8 | - | 0,01 | 0,01 | 0,04 | 0,032 |
| Notes : (a): mélange alkylbenzènesulfonate de sodium/alkylsulfate d'ammonium 1/1 (p/p) (b) : mélange acide hydroxyéthanedisphosphonique/acide diméthylaminométhanedi-phosphonique 1/3 (p/p) (c) : B4 est identique à B1 | | | | | | |

*Exemple 6*

On a préparé une composition concentrée selon l'invention comprenant :

| | |
|---|---|
| $H_2O_2$ | 50% en poids |
| mélange $CH_3CO_2H + CH_3CO_3H$ | 30 % en poids |
| $AgNO_3$ | 0,05 % en poids |
| $H_3PO_4$ | 0,05 % en poids |
| agent tensioactif | 0,25 % en poids |
| agent anticorrosion | 0,20 % en poids |
| $H_2O$ en complément jusqu'à | 100% en poids |

Cette composition est diluée au moment de l'emploi, jusqu'à la concentration requise en $H_2O_2$.

*Exemple 7*

On a préparé une composition mère dépolluante selon l'invention comprenant :

| | |
|---|---|
| $H_2O_2$ | 7,8 % en poids |
| mélange $CH_3CO_2H + CH_3CO_3H$ | 4,7 % en poids |
| $AgNO_3$ | 0,008 % en poids |
| $H_3PO_4$ | 0,008 % en poids |
| agent tensioactif | 0,04 % en poids |
| $H_2O$ en complément jusqu'à | 100 % en poids |

Cette composition mère est diluée au moment de l'emploi, jusqu'à une dilution finale d'utilisation inférieure à 1/100.
On a préparé de même, pour comparaison, des compositions analogues A7 et B7 ne différant de l'Ex 7 que par l'absence de $AgNO_3$ (composition A7) ou par l'absence du mélange $CH_3CO_2H + CH_3CO_3H$ (composition B7).

*Essais I*

La mesure des activités bactéricides, fongicides et sporicides des compositions selon l'invention a été entreprise comparativement avec les compositions de comparaison par nébulisation selon la norme française (telle que révisée en décembre 1989) AFNOR NF 72 281, selon les conditions opératoires suivantes :

| Appareil nébulisateur | AEROBRUMEUR[®] type H |
|---|---|
| Débit | 16 ml/m$^3$ |
| Quantité de produit à tester | 540 ml |
| Durée de diffusion du produit (i.e. composition) à tester | 12 minutes |
| Enceinte d'essai | |
| volume | 33 m$^3$ |
| température | 23-24°C |
| humidité relative | 85 % (début), 80 % (fin) |
| Support | lames, porte objets pour bactériologie ou mycologie |
| Distance du support par rapport à la source | 1,2 m |
| Durée d'exposition du support | 2 h |
| Liquide de récupération | eau distillée stérile + TWEEN[®] 80 (à 0,5 % en poids) |
| Volume du liquide de récupération | 100 ml |
| Volume de rinçage des membranes | 100 ml |
| Nombre de rinçages | 3 |

Les résultats obtenus ont été consignés dans les tableaux IIa à IIe ci-après où figurent les concentrations des produits à tester (i.e. les compositions Ex 1-Ex 5, A1-A5 et B1-B5) après dilution avec de l'eau désionisée.

TABLEAU IIa

| Souche | (1) | Ex1 dilution : 1/5 | | A1 dilution : 1/5 | | B1 dilution : 1/5 | |
|---|---|---|---|---|---|---|---|
| | | (2) | (3) | (2) | (3) | (2) | (3) |
| *Staphylococcus aureus* IP 52 154 | 1,8 x 10$^6$ | 0 | 6,25 | 0 | 6,25 | 0 | 6,25 |
| *Pseudomonas aeruginosa* IP A22 | 1,5 x 10$^6$ | 0 | 6,17 | 1,9 x 10 | 4,90 | 2,1 x 10 | 4,85 |
| *Enterococcus faecium* IP 5 855 | 1,6 x 10$^5$ | 0 | 5,20 | 10 | 4,20 | 9 x 10 | 3,25 |
| *Mycobacterium smegmatis* IP 7 326 | 1,3 x 10$^5$ | 0 | 5,11 | 2 x 10 | 3,81 | 1,9 x 10 | 3,84 |
| *Candida albicans* IP 1180 79 | 1,9 x 10$^5$ | 0 | 5,27 | 1,8 x 10 | 4,02 | 1,5 x 10 | 4,10 |
| *Penicillium verrucosum* IP 1186 79 | 1,5 x 10$^5$ | 0 | 5,17 | 2,3 x 10$^2$ | 2,81 | 2,7 x 10$^2$ | 2,74 |
| spores de *Bacillus subtilis var. Niger* IP 7 718(a) | 3,9 x 10$^3$ | 0 | 3,59 | 8,1 x 10 | 1,69 | 8,4 x 10 | 1,67 |
| Notes (1) nombre de germes (ou spores)/ml à l'instant T=0 ; i.e. $[S]_{T=0}$ (2) nombre de germes (ou spores)/ml à l'instant T=2h ; i.e. $[S]_{T=2h}$ (3) activité germicide (ou sporicide) ; i.e. $\Delta R = \log([S]_{T=0}) - \log([S]_{T=2h})$ | | | | | | | |

TABLEAU IIb

| Souche | (1) | Ex2 dilution : ½ | | A2 dilution ½ | | B2 dilution : ½ | |
|---|---|---|---|---|---|---|---|
| | | (2) | (3) | (2) | (3) | (2) | (3) |
| *Staphylococcus aureus* IP 52 154 | $1,9 \times 10^6$ | 0 | 6,27 | 0 | 6,27 | 0 | 6,27 |
| *Pseudomonas aeruginosa* IP A22 | $1,5 \times 10^6$ | 0 | 6,17 | 0 | 6,17 | 0 | 6,17 |
| *Enterococcus faecium* IP 5 855 | $1,6 \times 10^5$ | 0 | 5,20 | 0 | 5,20 | 5 | 4,61 |
| *Mycobacterium smegmatis* IP 7 326 | $1,4 \times 10^5$ | 0 | 5,14 | 0 | 5,14 | 10 | 4,14 |
| *Candida albicans* IP 1180 79 | $1,9 \times 10^5$ | 0 | 5,27 | 5 | 4,58 | 10 | 4,27 |
| *Penicillium verrucosum* IP 1186 79 | $1,5 \times 10^5$ | 0 | 5,17 | $2 \times 10^2$ | 2,87 | $2,3 \times 10^2$ | 2,81 |
| spores de *Bacillus subtilis var.* **Niger** IP 7 718(a) | $3,9 \times 10^3$ | 0 | 3,59 | $4,8 \times 10$ | 1,91 | $5,1 \times 10$ | 1,89 |

**Notes** :
(1) nombre de germes (ou spores)/ml à l'instant T=0 ; i.e. $[S]_{T=0}$
(2) nombre de germes (ou spores)/ml à l'instant T=2h ; i.e. $[S]_{T=2h}$
(3) activité germicide (ou sporicide) ; i.e. $\Delta R = \log([S]_{T=0}) - \log([S]_{T=2h})$

TABLEAU IIc

| Souche | (1) | Ex 3 dilution : 1/10 | | A3 dilution 1/10 | | B3 dilution : 1/10 | |
|---|---|---|---|---|---|---|---|
| | | (2) | (3) | (2) | (3) | (2) | (3) |
| *Staphylococcus aureus* IP 52 154 | $2,1 \times 10^6$ | 10 | 5,32 | $1,1 \times 10^2$ | 4,28 | $1,2 \times 10^2$ | 4,25 |
| *Pseudomonas aeruginosa* IP A22 | $1,4 \times 10^6$ | 10 | 5,14 | $3,5 \times 10$ | 3,60 | $3,7 \times 10$ | 3,58 |
| *Enterococcus faecium* IP 5 855 | $1,3 \times 10^5$ | 0 | 5,11 | $10^2$ | 3,11 | $1,7 \times 10^2$ | 2,88 |
| *Mycobacterium smegmatis* IP 7 326 | $1,5 \times 10^5$ | 0 | 5,17 | $1,9 \times 10^2$ | 2,89 | $2,2 \times 10^2$ | 2,87 |
| *Candida albicans* IP 1180 79 | $1,7 \times 10^5$ | 10 | 4,23 | $2,8 \times 10^2$ | 2,78 | $3,1 \times 10^2$ | 2,73 |
| *Penicillium verrucosum* IP 1186 79 | $1,1 \times 10^5$ | $1,3 \times 10$ | 3,82 | $6,7 \times 10^2$ | 2,21 | $1,1 \times 10^2$ | 2,00 |
| spores de *Bacillus subtilis var. Niger* IP 7718 (a) | $4,2 \times 10^3$ | 0 | 3,62 | $1,3 \times 10^2$ | 1,51 | $1,9 \times 10^2$ | 1,34 |

**Notes :**
(1) nombre de germes (ou spores)/ml à l'instant T=0 i.e. $[S]_{T=0}$
(2) nombre de germes (ou spores)/ml à l'instant T=2h; i.e. $[S]_{T=2h}$
(3) activité germicide (ou sporicide) ; i.e. $\Delta R = \log([S]_{T=0}) - \log([S]_{T=2h})$

TABLEAU IId

| Souche | (1) | Ex 4 dilution 1/5 | | A4 : dilution 1/5 | | B4 = B1 dilution : 1/5 | |
|---|---|---|---|---|---|---|---|
| | | (2) | (3) | (2) | (3) | (2) | (3) |
| *Staphylococcus aureus* IP 52 154 | $2 \times 10^6$ | 0 | 6,30 | 0 | 6,30 | 0 | 6,30 |
| *Pseudomonas aeruginosa* IP A22 | $1,5 \times 10^6$ | 0 | 6,17 | $2,11 \times 10$ | 4,85 | $2,1 \times 10$ | 4,85 |
| *Enterococcus faecium* IP 5 855 | $1,6 \times 10^5$ | 0 | 5,20 | $1,1 \times 10$ | 4,16 | $9 \times 10$ | 3,25 |
| *Mycobacterium smegmatis* IP 7 326 | $1,3 \times 10^5$ | 0 | 5,11 | $2,2 \times 10$ | 3,77 | $1,9 \times 10$ | 3,84 |
| *Candida albicans* IP 1180 79 | $1,8 \times 10^5$ | 0 | 5,25 | $1,9 \times 10$ | 3,98 | $1,5 \times 10$ | 4,08 |
| *Penicillium verrucosum* IP 1186 79 | $1,3 \times 10^5$ | 0 | 5,11 | $2,7 \times 10^2$ | 2,68 | $2,6 \times 10^2$ | 2,70 |
| spores de *Bacillus subtilis var. Niger* IP 7718(a) | $3,9 \times 10^3$ | 0 | 3,59 | $9 \times 10$ | 1,64 | $8,4 \times 10$ | 1,67 |

**Notes :**
(1) nombre de germes (ou spores)/ml à l'instant T=0 ; i.e. $[S]_{T=0}$
(2) nombre de germes (ou spores)/ml à l'instant T=2h ; i.e. $[S]T=_{2h}$
(3) activité germicide (ou sporicide) ; i.e. $\Delta R = \log([S]_{T=0}) - \log([S]T=_{2h})$

TABLEAU IIe

| Souche | (1) | Ex 5 dilution : 1/10 | | A5 dilution 1/10 | | B5 dilution : 1/10 | |
|---|---|---|---|---|---|---|---|
| | | (2) | (3) | (2) | (3) | (2) | (3) |
| *Staphylococcus aureus* IP 52 154 | $1,9 \times 10^6$ | $1,1 \times 10$ | 5,16 | $1,4 \times 10^2$ | 4,06 | $1,1 \times 10^2$ | 4.16 |
| *Pseudomonas aeruginosa* IP A22 | $1,5 \times 10^6$ | 10 | 5,17 | $3,7 \times 10$ | 4,61 | $1,5 \times 10$ | 4,00 |
| *Enterococcus* faecium IP 5 855 | $1,7 \times 10^5$ | 0 | 5,23 | $1,2 \times 10^2$ | 3,16 | $1,5 \times 10^2$ | 3,06 |
| *Mycobacterium smegmatis* IP 7 326 | $1,3 \times 10^5$ | 0 | 5,11 | $2 \times 10^2$ | 2,51 | $1,7 \times 10^2$ | 2,88 |
| *Candida albicans* IP 1180 79 | $1,9 \times 10^5$ | 2 | 4,97 | $3,1 \times 10^2$ | 2,00 | $3 \times 10^3$ | 2,80 |
| *Penicillium verrucosum* IP 1186 79 | $1,5 \times 10^5$ | $1,1 \times 10$ | 4,13 | $6,6 \times 10^2$ | 2,36 | $10^3$ | 2,17 |

TABLEAU IIe (suite)

| Souche | (1) | Ex 5 dilution : 1/10 | | A5 dilution 1/10 | | B5 dilution : 1/10 | |
|---|---|---|---|---|---|---|---|
| | | (2) | (3) | (2) | (3) | (2) | (3) |
| spores de *Bacillus sub-tilis var. Niger* IP 7 718(a) | $4,1 \times 10^3$ | 0 | 3,61 | $1,4 \times 10^2$ | 1,47 | $1,8 \times 10^2$ | 1,36 |
| **Notes :** <br> (1) nombre de germes (ou spores)/ml à l'instant T=0 ; i.e, $[S]_{T=0}$ <br> (2) nombre de germes (ou spores)/ml à l'instant T=2h ; i.e. $[S]T=_{2h}$ <br> (3) activité germicide (ou sporicide) ; i.e. $\Delta R = log([S]_{T=0}) - log([S]T=_{2h})$ | | | | | | | |

Les résultats des tableaux IIa à IIe montrent que (i) à la différence des compositions A1-A5 et B1-B5, les compositions selon l'invention sont toutes fongicides vis-à-vis des souches d*e Penicillium verrucosum*, quelle que soit la dilution, et (ii) les compositions selon l'invention sont, à une dilution donnée, toujours plus efficaces que les compositions A1-A5 et B1-B5. Ces résultats illustrent par ailleurs la synergie de l'association $H_2O_2$ + mélange $RCO_2H/RCO_3H$ + composant d'argent.

***Essais II***

Pour étudier l'activité antiparasitaire des compositions selon l'invention (Ex 1-Ex 5) on a fait appel à des parasites responsables de bilharzioses, à savoir des souches *de Schistosoma haematobium* (bilharziose vésicale) et de *Schistosoma mansoni* (bilharziose intestinale).

Dans des récipients à fond plat du type boîte de Pétri contenant chacun 90 ml de milieu nutritif et 8 à 10 larves de parasites à l'instant T=0, on introduit 10 ml des compositions à tester non diluées. On mesure le nombre de larves vivantes à l'instant T=0,5 h.

Les résultats obtenus sont consignés dans le tableau III ci-après :

TABLEAU III

| | Nombre de larves vivantes | | | |
|---|---|---|---|---|
| Produit | *Schistosoma haematobium* | | *Schistosoma mansoni* | |
| | T=0 | T=0,5 h | T=0 | T=0,5 h |
| Ex1 | 10 | 0 | 8 | 0 |
| A1 | 10 | 3 | 8 | 2 |
| B1 | 10 | 3 | 8 | 3 |
| Ex2 | 10 | 0 | 8 | 0 |
| A2 | 10 | 3 | 8 | 2 |
| B2 | 10 | 3 | 8 | 2 |
| Ex3 | 8 | 0 | 8 | 0 |
| A3 | 8 | 2 | 8 | 2 |
| B3 | 8 | 3 | 8 | 2 |
| Ex4 | 8 | 1 | 8 | 0 |
| A4 | 8 | 2 | 8 | 2 |
| B4 | 8 | 2 | 8 | 2 |
| Ex5 | 8 | 0 | 8 | 0 |
| A5 | 8 | 2 | 8 | 2 |
| B5 | 8 | 2 | 8 | 3 |

Les résultats du tableau III mettent en évidence l'intérêt des compositions Ex 1 -Ex 5 selon l'invention par rapport aux compositions A1-A5 et B1-B5, d'une part, et la synergie de l'association $H_2O_2$ + mélange $RCO_2H/RCO_3H$ + composant d'argent, d'autre part.

## Essais III

Des essais ont été entrepris selon la norme française AFNOR NF T 72 180 (telle que remaniée en décembre 1989) pour apprécier les propriétés virucides des compositions selon l'invention (Ex 1-Ex 5) par rapport aux compositions antérieures (A1-A5 et B1-B5). En bref, on met en contact les suspensions virales pendant 15, 30 et 60 minutes à 20° C avec chaque composition (i.e. "produit") à tester diluée au moyen d'un tampon phosphate puis on mesure le titre de chaque suspension virale après avoir arrêté l'activité virucide de ladite composition par dilution rapide, ou mieux par tamisage moléculaire. Les témoins n'ont reçu que le tampon phosphate.

Dans ces conditions opératoires une composition à tester est dite virucide si elle diminue d'au moins 10 000 fois la population (i.e. réduction du titre viral d'une valeur d'au moins 4) du virus considéré par rapport aux essais témoins.

Les résultats obtenus (moyenne de 5 mesures) sont consignés dans les tableaux IVa, IVb et IVc ci-après, les souches virales utilisées étant les suivantes :

*Orthopoxvirus* (virus de la vaccine),
*Adenovirus* (adénovirus humain type 5) et
*Poliovirus* (virus poliomyélitique 1, souche SABIN).

TABLEAU IVa

| *Souche virale : Orthopoxvirus* | | | |
|---|---|---|---|
| Produit (dilution) | Titre viral, i.e. $\log([S]_{T=X})$ | | |
| | T=0,25 h | T=0,5h | T=1h | Témoin T=1h |
| Ex1 (9/10) | ≤2,34 | ≤2,34 | ≤2,34 | 7,82 |
| A1 (9/10) | ≤2,34 | ≤2,34 | ≤2,34 | |
| B1 (9/10) | ≤2,34 | ≤2,34 | ≤2,34 | |
| Ex1 (1/2) | ≤2,34 | ≤2,34 | ≤2,34 | 7,82 |
| A1 (1/2) | 5,21 | ≤2,34 | ≤2,34 | |
| B1 (1/2) | 6,12 | 4,15 | ≤2,34 | |
| Ex1 (1/10) | 3,14 | ≤2,34 | ≤2,34 | 7,82 |
| A1 (1/10) | 7,60 | 6,20 | ≤2,34 | |
| B1 (1/10) | 7,80 | 6,50 | 4,50 | |
| Ex2 (9/10) | ≤2,34 | ≤2,34 | ≤2,34 | 7,84 |
| A2(9/10) | ≤2,34 | ≤2,34 | ≤2,34 | |
| B2(9/10) | ≤2,34 | 4,15 | ≤2,34 | |
| Ex2(1/2) | ≤2,34 | ≤2,34 | ≤2,34 | 7,84 |
| A2 (1/2) | 5,80 | ≤2,34 | ≤2,34 | |
| B2 (1/2) | 7,16 | 5,44 | ≤2,34 | |
| Ex2 (1/10) | 3,36 | ≤2,34 | ≤2,34 | 7,84 |
| A2 (1/10) | 7,76 | 7,15 | ≤2,34 | |
| B2 (1/10) | 7,81 | 7,22 | 5,25 | |

TABLEAU IVa (suite)

| Souche virale : Orthopoxvirus | | | | |
|---|---|---|---|---|
| Produit (dilution) | Titre viral, i.e.log($[S]_{T=X}$) | | | |
| | T=0,25 h | T=0,5h | T=1h | Témoin T=1h |
| Ex3(1/2) | ≤2,34 | ≤2,34 | ≤2,34 | 7,83 |
| A3 (1/2) | 5,88 | 3,30 | ≤2,34 | |
| B3 (1/2) | 7,50 | 6,20 | ≤2,34 | |
| Ex3 (1/10) | 3,42 | ≤2,34 | ≤2,34 | 7,83 |
| A3 (1/10) | 7,80 | 7,40 | 3,27 | |
| B3 (1/10) | 7,82 | 7,30 | 5,60 | |
| Ex4 (1/2) | 3,41 | ≤2,34 | ≤2,34 | 7,82 |
| A4 (1/2) | 7,30 | 5,50 | 4,36 | |
| B4 (1/2) | 6,12 | 4,15 | ≤2,34 | |
| Ex4 (1/10) | 3,31 | ≤2,34 | ≤2,34 | 7,82 |
| A4 (1/10) | 7,79 | 7,20 | 5,10 | |
| B4 (1/10) | 7,80 | 6,50 | 4,50 | |
| Ex5 (1/10) | 3,29 | ≤2,34 | ≤2,34 | 7,83 |
| A5 (1/10) | 7,60 | 7,09 | 4,27 | |
| B5 (1/10) | 7,71 | 6,41 | 3,80 | |

TABLEAU IVb

| Souche virale : Adenovirus | | | | |
|---|---|---|---|---|
| Produit (dilution) | Titre viral, i.e. log($[S]_{T=X}$) | | | |
| | T=0,25 h | T=0,5h | T=1h | Témoin T=1h |
| Ex1 (9/10) | ≤2,34 | ≤2,34 | ≤2,34 | 7,07 |
| A1 (9/10) | 4,66 | 4,35 | 4,06 | |
| B1 (9/10) | 4,41 | 4,04 | 3,71 | |
| Ex1(1/2) | ≤2,34 | ≤2,34 | ≤2,34 | 7,07 |
| A1 (1/2) | 5,52 | 4,90 | 4,71 | |
| B1 (1/2) | 2,74 | ≤2,34 | ≤2,34 | |
| Ex1 (1/10) | 2,74 | ≤2,34 | ≤2,34 | 7,07 |
| A1 (1/10) | 7,17 | 5,98 | 5,36 | |
| B1 (1/10) | 6,26 | 5,49 | 5,05 | |

TABLEAU IVc

| Souche virale : Poliovirus | | | | |
|---|---|---|---|---|
| Produit (dilution) | Titre viral, i.e. log($[S]_{T=X}$) | | | |
| | T=0,25 h | T=0,5h | T=1h | Témoin T=1h |
| Ex1 (9/10) | ≤2,34 | ≤2,34 | ≤2,34 | 8,44 |
| A1 (9/10) | 6,20 | 5,49 | 5,11 | |
| B1 (9/10) | 6,12 | 5,38 | 4,82 | |
| Ex1(1/2) | ≤2,34 | ≤2,34 | ≤2,34 | 8,44 |
| A1 (1/2) | 6,97 | 6,31 | 5,72 | |
| B1 (1/2) | 6,63 | 5,47 | 5,14 | |
| Ex1 (1/10) | 3,64 | 2,81 | ≤2,34 | 8,44 |
| A1 (1/10) | 7,59 | 7,40 | 6,37 | |
| B1 (1/10) | 7,41 | 7,29 | 6,22 | |

Les résultats des tableaux IVa, IVb et IVc montrent que (i) seules les compositions selon l'invention sont virucides aux dilutions (9/10, 1/2 et 1/10) et durées de contact (0,25 h, 0,5 h et 1h) utilisées, et (ii) pour une dilution et une durée de contact données, les compositions selon l'invention sont d'une manière générale plus actives que les compositions de l'art antérieur.

*Essais IV*

Des essais complémentaires ont été entrepris dans des exploitations agricoles expérimentales (bananeraie contaminée par le chancre du bananier, *Colletotrichum musae*, d'une part, et verger contaminé par le chancre du pommier, *Nectria galligena*, d'autre part) avec les compositions selon l'invention (Ex 1-Ex 5) administrées par nébulisation.

On a ainsi pu sauver les arbres malades et protéger efficacement les arbres sains.

D'autres essais réalisés sur des récoltes stockées dans des silos ou des barquettes (céréales, tomates et raisins de table notamment) ont également permis de mettre en évidence la protection desdites récoltes vis-à-vis des germes usuels les détériorant

*Essais V*

Des essais ont été entrepris avec la composition de l'exemple 6 en tant que produit d'hygiène pour la décontamination des baignoires de balnéothérapie en faisant appel à des souches bactériennes hospitalières usuelles (*Pseudomonas aeruginosa, Pseudomonas cepacia, Enterobacter agglomerans, Enterobacter cloacae, Escherichia coli, Staphylococcus cohnii, Staphylococcus aureus*). On a constaté qu'à une dilution finale d'utilisation de $5/10^7$, la composition de l'exemple 6 ainsi utilisée a un effet bactériostatique efficace pendant au moins 48h. A la même dilution finale les compositions comparatives ne comportant pas soit le composant $AgNO_3$ soit le mélange $CH_3CO_2H$ + $CH_3CO_3H$ se sont révélées inefficaces.

Les essais VI-IX qui suivent ont trait à des expériences de dépollution réalisées avec des dilutions de la composition mère de l'exemple 7 et, le cas échéant, les compositions analogues A7 (sans $AgNO_3$) et B7 (sans le mélange $CH_3CO_2H$ + $CH_3CO_3H$).

*Essais VI*

Des essais ont été entrepris sur des sols typiques de l'industrie minière recueillis dans un parc de résidus miniers de la compagnie canadienne IRON ORES, le sol No 1 provenant d'une usine de boulettes de fer abandonnée et le sol No 2 ayant été prélevé près d'un convoyeur en arrêt. On a évalué l'effet de dilution de Ex 7, A7 et B7 sur la croissance ou l'inhibition des bactéries hétérotrophes extraites de ces deux sols.

Les microorganismes ont été extraits de chaque sol (5g) avec une solution saline stérile (50 ml) contenant 0,85 % p/v de NaCl. L'extrait résultant a été dilué successivement 7 fois (dilutions 1/10). Un volume de 1 ml de l'extrait et de chaque dilution a été placé dans un tube à essai de 15 ml contenant 8 ml de milieu de culture ("Nutrient broth" à la concentration de 8 g/l) et 1 ml d'une dilution (1/100, 1/10 000, 1/100 000 ou 1/1 000 000) de la composition de Ex 7, A7 ou B7. Les tubes ont été mis à incuber à 30°C pendant 3 jours, le lot témoin ne recevant aucun produit à tester (i.e. dilution de Ex 7, A7 ou B7).

Les résultats obtenus (moyennes de cinq essais par composition et par dilution testées) sont consignés dans le tableau V ci-après.

Tableau V

| Inhibition des bactéries hétérotrophes | | |
|---|---|---|
| Produit (dilution) | Hétérotrophes totaux /g de sol sec | |
| | dans sol $N^o$ 1 | dans sol $N^o$ 2 |
| Témoins | $5 \times 10^5$ | $5 \times 10^6$ |
| Ex 7 ($1/10^6$) | $5 \times 10^5$ | $3 \times 10^6$ |
| A7 ($1/10^6$) | $5 \times 10^5$ | $5 \times 10^6$ |
| B7($1/10^6$) | $5 \times 10^5$ | $5 \times 10^6$ |
| Ex 7 ($1/10^5$) | $2 \times 10^5$ | $2 \times 10^6$ |
| A7 ($1/10^5$) | $5 \times 10^5$ | $5 \times 10^6$ |
| B7($1/10^5$) | $5 \times 10^5$ | $5 \times 10^6$ |
| Ex 7 ($1/10^4$) | <10 | $10^2$ |
| A7 ($1/10^4$) | 10 | $10^6$ |
| B7($1/10^4$) | $3 \times 10^5$ | $3 \times 10^6$ |
| Ex 7 ($1/10^2$) | < 10 | < 10 |
| A7 ($1/10^2$) | $5 \times 10^3$ | $6 \times 10^3$ |
| B7($1/10^2$) | $8 \times 10^3$ | $10^4$ |

Le tableau V met en évidence que Ex 7 est très efficace aux dilutions de $1/10^4$ et $1/10^2$, alors que, aux mêmes dilutions. A7 et B7 sont inutilisables.

## Essais VII

Des essais ont été entrepris pour étudier l'inhibition d'une souche pure de *Thiobacillus ferrooxidans* (ATCC 13661) dans un milieu liquide $(NH_4)_2SO_4$, 0,5 g/l de $MgSO_4.7H_2O$, 0,5 g/l de $K_2HPO_4$, 33,4 g/l de $FeSO_4.7H_2O$ et $H_2SO_4$ (pour ajuster le pH à 2,2).

Dans un tube à essai on introduit 1 ml de suspension de la souche pure *Thiobacillus ferrooxidans* (ATCC 13 661), 8 ml du milieu nutritif et la dilution de la composition de Ex 7 (à une dilution finale de $1/10^6$, $1/10^5$, $1/10^4$ et $1/10^3$). Les résultats obtenus (moyennes de 5 essais par dilution) sont consignés dans le tableau VI ci-après, le produit témoin ne comportant pas la dilution de Ex 7.

TABLEAU VI

| INHIBITION DE THIOBACILLUS FERROOXIDANS | |
|---|---|
| PRODUIT (dilution) | Nombre de *Thiobacillus ferrooxidans*/100ml |
| Témoin | $7 \times 10^7$ |

TABLEAU VI (suite)

| INHIBITION DE THIOBACILLUS FERROOXI-DANS | |
|---|---|
| PRODUIT (dilution) | Nombre de *Thiobacillus ferrooxidans*/100ml |
| Ex 7 (1/10$^6$) | 7 x 10$^7$ |
| Ex 7 (1/10$^5$) | 5 x 10$^7$ |
| Ex 7 (1/10$^4$) | 10$^3$ |
| Ex 7 (1/10$^3$) | <10 |

Les résultats du tableau montrent que Ex7 à la concentration finale est particulièrement efficace pour inhiber *Thiobacillus ferrooxidans* aux dilutions de 1/10$^4$ et surtout de 1/10$^3$. Dans ces essais la population bactérienne initiale (7 x 10$^7$ germes/100 ml) était très nettement supérieure à la population bactérienne normalement rencontrée dans les sols de l'industrie minière (10$^4$ à 10$^5$ germes/l).

### Essais VIII

Des essais ont été entrepris pour apprécier l'efficacité de Ex 7 vis-à-vis de l'oxydation des cyanures dans deux sols : un sol stérilisé constitué par du sable pauvre en matière organique, et un sol stérilisé constitué de sable et de matière organique (désigné ci-après "sol organique"). Ces sols stériles ont été contaminés avec KCN pour obtenir une concentration finale de 100 mg de CN par kg de sol.

On incorpore dans une dilution (1/1000, 1/100 ou 1/10) de la composition de l'exemple 7 CuSO$_4$ (pour avoir une concentration finale de 20 mg de Cu$^{2+}$ par kg de sol) en tant que catalyseur d'oxydation. 5 ml de chaque dilution de Ex 7 complétée en Cu$^{2+}$ sont ajoutés à 100 g de sol contaminé, la dilution finale de Ex 7 étant de 0,005, 0,5 ou 5 ml de Ex 7 par kg de sol. On laisse reposer les sols ainsi traités pendant 4 h à la température ambiante (10-25°C) puis on mesure la concentration en cyanure restant dans chaque sol.

Les résultats obtenus ont été consignés dans le tableau VII ci-après.

TABLEAU VII

| CYANURES RESTANT DANS LES SOLS | | |
|---|---|---|
| Ex 7 (ml/kg) | Cyanures totaux restant (mg/kg) | |
| | sable | sol organique |
| 0 | 27 ± 2 | 10 ± 0,5 |
| 0,005 | 21 ± 7 | 8,5 ± 1 |
| 0,5 | 3 ± 0,2 | 8,1 ± 0,5 |
| 5 | (-) | 4,3 ± 1,2 |

Les résultats du tableau VII montrent que les concentrations en cyanures dans les sols non traités se sont avérées plus faibles que la concentration initiale incorporée. Ceci explique que d'autres mécanismes d'enlèvement des cyanures sont intervenus (oxydation par l'air, évaporation, etc.). Ils montrent de plus que la concentration des cyanures restant dans le sol organique est plus faible que celle restant dans le sable, ceci s'explique par (i) le fait que les pH du sable (6,8) et du sol organique (7,4) sont différents, un environnement basique étant plus favorable à l'oxydation des cyanures, et (ii) le fait que la matière organique a pu oxyder les cyanures.

### Essais IX

Des essais complémentaires ont été effectués pour apprécier si oui ou non la composition dépolluante selon l'invention, qui inhibe les souches de *Thiobacillus ferrooxidans*, a un effet défavorable quant à la génération d'acide du fait de la présence de H$_2$O$_2$.

Une boue provenant d'une usine de traitement d'eaux usées contenant une forte population de *Thiobacillus ferrooxidans* et 20 % p/v de solide, a été acidifiée jusqu'à pH 4,0 avec de l'acide sulfurique. Des échantillons (75 ml) de cette boue ont été répartis dans des flacons de 250 ml. La moitié de ces flacons a été stérilisée pour tuer les bactéries présentes. Ensuite dans chaque flacon on a introduit 5 ml de diverses dilutions de Ex 7 pour arriver à des dilutions finales de $1/10^6$, $1/10^5$, $1/10^4$, $1/10^3$ et $1/10^2$. Tous les flacons ont été agités (agitateur orbital à 150 tours/minute) à 28°C pendant 4 jours. On a ensuite mesuré le pH de chaque flacon.

Les résultats obtenus (moyennes de 2 essais) ont été consignés dans le tableau VIII ci-après.

TABLEAU VIII

| Evaluation de pH de boues | | |
|---|---|---|
| Dilution de Ex 7 | pH dans boues stériles (sans *Thiobacillus ferrooxidans*) | pH dans boues contenant *Thiobacillus ferrooxidans* |
| 0 | 3,3 | 2,6 |
| $1/10^6$ | 3,3 | 2,7 |
| $1/10^5$ | 3,3 | 2,7 |
| $1/10^4$ | 3,3 | 2,9 |
| $1/10^3$ | 3,2 | 3,0 |
| $1/10^2$ | 2,7 | 2,7 |

En ce qui concerne les boues ne contenant pas *Thiobacillus ferrooxidans* (boues stérilisées), les résultats du tableau VIII montrent que (i) le pH des boues a diminué en l'absence de Ex 7 de 4,0 à 3,3, ceci indiquant que des réactions chimiques ont eu lieu, telles que l'oxydation naturelle de $Fe^{2+}$ par l'oxygène de l'air, (ii) à une dilution finale inférieure ou égale à $1/10^4$, Ex 7 n'a pas d'influence sur le pH, et (iii) en revanche à la dilution de $1/10^2$ Ex 7 induit une génération d'acide.

En ce qui concerne les boues contenant *Thiobacillus ferrooxidans*, les résultats du tableau VIII montrent que, (i) à l'exception de Ex 7 à la dilution finale de 1/100, les pH ont chuté à des valeurs plus faibles que celles mesurées dans les échantillons préalablement stérilisés pour une concentration identique en Ex 7, ceci indiquant une croissance de *Thiobacillus ferrooxidans*, (ii) le pH est d'autant plus faible que la concentration en Ex 7 est plus faible (i.e. le nombre de bactérie décroît quand la concentration en Ex 7 augmente), et (iii) à la dilution finale de 1/100 Ex7, qui devrait empêcher le pH de diminuer, induit une génération d'acide.

En conclusion, il résulte de ces essais que Ex 7 doit être utilisé à une dilution finale inférieure à 1/100 pour éviter l'effet de la génération d'acide, une dilution finale de 1/1000 convenant parfaitement.

*Synergie*

Pour apprécier l'interaction de l'ensemble $H_2O_2$ + composant d'argent + mélange $CH_3CO_2H/CH_3CO_3H$, on a utilisé la méthode décrite par R.F. SCHINAZI et al., Antimicrob. Agents Chemother., 22 (No 3), pages 499-507 (1982) et reprise par J.C. POTTAGE *ibidem* 30, (No 2), pages 215-219, (1986) et dans WO-A-91/13626, en tenant compte des définitions suivantes:

$IT_S$ = titre infectieux du stock de souches utilisé,
$IT_A$ = titre infectieux du produit A (ici $H_2O_2$ + mélange $CH_3CO_2H/CH_3CO_3H$) mis en contact avec ledit stock,
$IT_B$ = titre infectieux du produit B (ici $H_2O_2$ + composant d'argent) mis en contact avec ledit stock,
$T_{AB}$ = titre infectieux du produit A + B (ici $H_2O_2$ + mélange $CH_3CO_2H/CH_3CO_3H$ + composant d'argent) mis en contact avec ledit stock,
$S$ = $\log IT_S$,
$A$ = $\log IT_A$,
$B$ = $\log IT_B$,
$C$ = $\log IT_{AB}$,
$Y_A$ = $A/S = \log IT_A / \log IT_S$,
$Y_B$ = $B/S = \log IT_B / \log IT_S$,
$Y_{AB}$ = $C/S = \log IT_{AB} / \log IT_S$, et

$Y_c = $ produit $Y_A \times Y_B$,

on a une synergie si $Y_{AB} \leq Y_C$.

Compte-tenu de ces définitions, quand on reprend par exemple les valeurs données dans le tableau IVa on obtient la comparaison des valeurs $Y_{AB}$ et $Y_C$ données dans le tableau IX ci-après.

Ledit tableau IX montre que, à la dilution finale de 1/10, le mélange de constituants essentiels de Ex 1-Ex 5 présente une synergie par rapport à A1-A5 et respectivement B1-B5 vis-à-vis de la souche virale d'*orthopoxvirus*, dès lors que $Y_{AB}$ est inférieur ou égal à $Y_C$.

Tableau IX

| Synergie à la dilution de 1/10 vis-à-vis d'*orthopoxvirus* | | | | | | | | |
|---|---|---|---|---|---|---|---|---|
| Produits | S | A | B | C | $Y_A$ | $Y_B$ | $Y_{AB}$ | $Y_c$ |
| Ex 1, A1, B1 (T = 0,25 h) | 7,82 | 7,60 | 7,80 | ≤2,34 | 0,97 | 0,99 | ≤0,29 | 0,96 |
| Ex 2, A2, B2 (T = 0,25 h) | 7,84 | 7,76 | 7,81 | 3,36 | 0,98 | 0,99 | 0,42 | 0,97 |
| Ex 3, A3, B3 (T = 1h) | 7,83 | 3,27 | 5,60 | ≤2,34 | 0,41 | 0,71 | ≤0,29 | 0,29 |
| Ex 4, A4, B4 (T = 0,5 h) | 7,82 | 7,20 | 6,50 | ≤2,34 | 0,92 | 0,83 | ≤0,29 | 0,76 |
| Ex 5, A5, B5 (T = 0,5 h) | 7,83 | 7,09 | 6,41 | ≤2,34 | 0,90 | 0,81 | ≤0,29 | 0,72 |

## Revendications

1. Composition aqueuse décontaminante, ladite composition, qui contient en milieu acide $H_2O_2$ et un composant d'argent, étant caractérisée en ce qu'elle comprend :

   (A) une quantité inférieure ou égale à 60 % en poids de $H_2O_2$ par rapport au poids total de ladite composition ;
   (B) un mélange $RCO_3H/RCO_2H$ où R est méthyle ou éthyle, ledit mélange intervenant selon une quantité telle que le rapport pondéral dudit mélange au peroxyde d'hydrogène soit compris entre 0,15/1 et 0,85/1 ;
   (C) un composant d'argent en tant que source d'ions $Ag^+$, choisi parmi l'ensemble constitué par les sels et complexes d'argent, ledit composant d'argent intervenant selon une quantité telle que le rapport pondéral dudit composant d'argent au peroxyde d'hydrogène soit compris entre 0,0005/1 et 0,015/1 ;
   (D) un agent stabilisant intervenant selon une quantité telle que le rapport pondéral dudit agent stabilisant au peroxyde d'hydrogène soit compris entre 0,0005/1 et 0,025/1; et,

   de l'eau en complément jusqu'à 100 % en poids.

2. Composition suivant la revendication 1, caractérisée en ce qu'elle comprend en outre au moins un des composants choisis parmi l'ensemble constitué par les

   (E) agent tensioactif ;
   (F) agent anticorrosion ; et,
   (G) parfum.

3. Composition suivant la revendication 1, caractérisée en ce que le rapport pondéral du composant d'argent au peroxyde d'hydrogène est compris entre 0,0008/1 et 0,005/1.

4. Composition suivant la revendication 1, caractérisée en ce que le rapport pondéral de l'agent stabilisant au peroxyde d'hydrogène est compris entre 0,0008/1 et 0,005/1.

5. Composition suivant la revendication 1, caractérisée en ce qu'elle comprend en outre

   (E) un agent tensioactif selon une quantité telle que le rapport pondéral dudit agent tensioactif au peroxyde d'hydrogène soit compris entre 0,00005/1 et 0,01/1 et de préférence de l'ordre de 0,005/1 ;
   (F) un agent anticorrosion selon une quantité telle que le rapport pondéral dudit agent anticorrosion au peroxyde d'hydrogène soit compris entre 0,00005/1 et 0,03/1 et de préférence entre 0,001/1 et 0,005/1 ; et/ou,

(G) un parfum selon une quantité inférieure ou égale à celle de l'agent anticorrosion ci-dessus.

**6.** Composition suivant la revendication 1, caractérisée en ce qu'elle comprend :

(A) 1,5 à 8 % en poids de $H_2O_2$ ;
(B) 0,75 à 5,6 % en poids d'un mélange de $RCO_3H$ et de $RCO_2H$ où R est éthyle ou mieux méthyle ;
(C) 0,0012 à 0,04 % en poids d'un composant d'argent choisi parmi les complexes et les sels d'argent en tant que source d'ions $Ag^+$ ;
(D) 0,0012 à 0,04 % en poids de $H_3PO_4$ ;
(E) le cas échéant 0,0075 à 0,04 % en poids d'agent tensioactif ;
(F) le cas échéant 0,003 à 0,04 % en poids d'agent anticorrosion ;
(G) le cas échéant un parfum ; et,

de l'eau en complément jusqu'à 100 % en poids.

**7.** Composition suivant la revendication 1 ou 6, caractérisée en ce qu'elle renferme

(A) 7,5-8 % en poids de $H_2O_2$ ;
(B) 4,5 à 4,8 % en poids d'un mélange $CH_3CO_3H + CH_3CO_2H$ ;
(C) 0,008 % en poids de $AgNO_3$ ;
(D) 0,008 % en poids de $H_3PO_4$ ; et,

de l'eau en complément jusqu'à 100 % en poids.

**8.** Procédé pour la préparation d'une composition aqueuse décontaminante selon la revendication 1, ledit procédé étant caractérisé en ce qu il comprend les étapes consistant à :

(1°) préparer une solution aqueuse du composant d'argent, qui intervient comme source d'ions $Ag^+$ ;
(2°) introduire dans ladite solution résultante, ainsi obtenue, l'agent stabilisant ;
(3°) introduire ladite solution résultante, ainsi obtenue, dans l'eau oxygénée ou introduire l'eau oxygénée dans ladite solution résultante;
(4°) introduire dans ladite solution résultante, ainsi obtenue, une substance acide choisie parmi l'ensemble constitué par $RCO_3H$, $RCO_2H$ et leurs mélanges $RCO_3H + RCO_2H$ ;
(5°) laisser reposer ladite solution résultante, ainsi obtenue, jusqu'à ce que l'équilibre

$$H_2O_2 + RCO_2H \leftrightarrow RCO_3H + H_2O$$

soit établi ; et,
(6°) compléter jusqu'à 100 % en poids avec de l'eau.

**9.** Procédé suivant la revendication 8, pour la préparation d'une composition aqueuse décontaminante contenant 7,5 à 8 % en poids de $H_2O_2$ selon la revendication 7, ledit procédé étant caractérisé en ce qu'il comprend les étapes consistant à :

(1°) préparer une solution de $AgNO_3$ dans une portion de la quantité d'eau totale requise pour réaliser ladite composition aqueuse désinfectante ;
(2°) introduire dans la solution résultante ainsi obtenue une solution aqueuse d'acide phosphorique contenant 85 % en poids de $H_3PO_4$ ;
(3°) introduire la solution résultante, ainsi obtenue, dans une solution aqueuse de peroxyde d'hydrogène contenant 50 à 60 % en poids de $H_2O_2$, sous agitation, à une température comprise entre 0°C et 25°C et mieux à une température comprise entre 4°C et 15°C et avec un débit d'introduction de la solution obtenue à l'étape (2°) compris entre 3 et 6 l/h ;
(4°) introduire dans la solution résultante, ainsi obtenue, la substance acide $CH_3CO_2H$, sous agitation, à une température comprise entre 0°C et 25°C et mieux à une température comprise entre 4°C et 15°C, et avec un débit d'introduction de la substance acide $CH_3CO_2H$ compris entre 3 et 6 l/h ;
(5°) laisser reposer la solution résultante, ainsi obtenue, pendant 48 h, à l'obscurité, à une température comprise entre 0°C et 25°C et mieux à une température comprise entre 4°C et 15°C, pour que l'équilibre

$$H_2O_2 + CH_3CO_2H \leftrightarrow CH_3CO_3H + H_2O$$

s'établisse, et,

(6°) ajouter l'eau restante pour compléter jusqu'à 100 % en poids.

10. Utilisation d'une composition suivant l'une quelconque des revendications 1 à 7, pour la désinfection ou l'hygiène des enceintes closes, des surfaces de divers matériaux, des instruments, des aliments, des récoltes, des cultures de plein champ ou de serre, des réservoirs, des conduites et de l'eau de boisson, ladite utilisation étant caractérisée en ce qu'elle comprend :

(i) un traitement en surface ou en volume du produit à désinfecter ou décontaminer, à une température comprise entre 0°C et 50°C, de préférence à la température ambiante (RT) dans la plage de 10°C à 25°C, avec ladite composition aqueuse désinfectante éventuellement diluée, puis
(ii) le séchage dudit produit ainsi traité.

11. Utilisation d'une composition suivant l'une quelconque des revendications 1 à 7, pour la dépollution des sites de l'industrie minière en vue de prévenir la génération d'acide et/ou de détruire les cyanures.

## Claims

1. An aqueous decontaminating composition, said composition, which contains $H_2O_2$ and a silver component in an acid medium, comprising

(A) an amount of $H_2O_2$ less than or equal to 60% by weight, based on the total weight of said composition ;
(B) an $RCO_3H/RCO_2H$ mixture, wherein R is methyl or ethyl, said mixture being present in an amount such that the weight ratio of said mixture to hydrogen peroxide is between 0.15/1 and 0.85/1 ;
(C) a silver compound as a source of $Ag^+$ ions, selected from the group consisting of silver salts and complexes, said silver compound being present in an amount such that the weight ratio of said silver compound to hydrogen peroxide is between 0.0005/1 and 0.015/1 ;
(D) a stabilizer present in an amount such that the weight ratio of said stabilizer to hydrogen peroxide is between 0.0005/1 and 0.025/1 ; and

water to make up to 100% by weight.

2. A composition according to claim 1 which also comprises at least one compound selected from the group consisting of :

(E) a surfactant ;
(F) a corrosion inhibitor ; and
(G) a fragrance.

3. A composition according to claim 1 wherein the weight ration of the silver compound to hydrogen peroxide is between 0.0008/1 and 0.005/1.

4. A composition according to claim 1 wherein the weight ratio of the stabilizer to hydrogen peroxide is between 0.0008/1 and 0.005/1.

5. A composition according to claim 1 which further comprises

(E) a surfactant in an amount such that the weight ratio of said surfactant to hydrogen peroxide is between 0.00005/1 and 0.01/1 and preferably of the order of 0.005/1 ;
(F) a corrosion inhibitor in an amount such that the weight ratio of said corrosion inhibitor to hydrogen peroxide is between 0.00005/1 and 0.03/1 and preferably between 0.001/1 and 0.005/1 ; and/or
(G) a fragrance in an amount less than or equal to that of the above corrosion inhibitor.

6. A composition according to claim 1 comprising

(A) 1.5 to 8% by weight of $H_2O_2$ ;

(B) 0.75 to 5.6% by weight of a mixture of $RCO_3H$ and $RCO_2H$, wherein R is ethyl or, preferably, methyl ;

(C) 0.0012 to 0.04% by weight of a silver compound selected from silver complexes and salts as a source of $Ag^+$ ions ;

(D) 0.0012 to 0.04% by weight of $H_3PO_4$ ;

(E) optionally, 0.0075 to 0.04% by weight of surfactant ;

(F) optionally, 0.003 to 0.04% by weight of corrosion inhibitor ;

(G) optionally, a fragrance ; and

water to make up to 100% by weight.

7. A composition according to claim 1 or 6, containing

(A) 7.5-8% by weight of $H_2O_2$ ;

(B) 4.5 to 4.8% by weight of a mixture of $CH_3CO_3H + CH_3CO_2H$ ;

(C) 0.008% by weight of $AgNO_3$ ;

(D) 0.008% by weight of $H_3PO_4$ ; and

water to make up to 100% by weight.

8. A method for preparing an aqueous decontaminating composition according to claim 1, said method comprising the steps consisting in

(1°) preparing an aqueous solution of the silver compound which is present as a source of $Ag^+$ ions ;

(2°) introducing the stabilizer into the resulting solution thus obtained ;

(3°) introducing the resulting solution thus obtained into the hydrogen peroxide solution or introducing the hydrogen peroxide solution into said resulting solution ;

(4°) introducing, into the resulting solution thus obtained, an acid substance selected from the group consisting of $RCO_3H$, $RCO_2H$ and mixtures thereof ;

(5°) leaving the resulting solution thus obtained until the equilibrium

$$H_2O_2 + RCO_2H \leftrightarrow RCO_3H + H_2O$$

has been established ; and

(6°) making up to 100% by weight with water.

9. A method according to claim 8 for the preparation of an aqueous decontaminating composition containing 7.5 to 8% by weight of $H_2O_2$ according to claim 7, said method comprising the steps consisting in

(1°) preparing a solution of $AgNO_3$ in a portion of the total amount of water required to produce said aqueous disinfecting composition ;

(2°) introducing, into the resulting solution thus obtained, an aqueous solution of phosphoric acid containing 85% by weight of $H_3PO_4$ ;

(3°) introducing the resulting solution thus obtained into an aqueous solution of hydrogen peroxide containing 50 to 60% by weight of $H_2O_2$, under stirring, at a temperature of between 0°C and 25°C and preferably at a temperature of between 4°C and 15°C, with an introduction rate of the solution obtained in step (2°) of between 3 and 6 l/h ;

(4°) introducing the acid substance $CH_3CO_2H$ into the resulting solution thus obtained, under stirring, at a temperature of between 0°C and 25°C and preferably at a temperature of between 4°C and 15°C, with an introduction rate of the acid substance $CH_3CO_2H$ of between 3 and 6 l/h ;

(5°) leaving the resulting solution thus obtained to stand for 48 h, in the dark, at a temperature of between 0°C and 25°C and preferably at a temperature of between 4°C and 15°C, so that the equilibrium

$$H_2O_2 + CH_3CO_2H \leftrightarrow CH_3CO_3H + H_2O$$

is established ; and

(6°) adding the remaining water to make up to 100% by weight.

10. The use of a composition according to any one of claims 1 to 7 for the disinfection or hygiene of enclosed spaces, surfaces of various materials, instruments, foodstuffs, harvests, outdoor or greenhouse crops, storage containers, pipelines and drinking water, said use comprising

(i) a surface or volume treatment of the product to be disinfected or decontaminated, at a temperature of between 0°C and 50°C, preferably at room temperature (RT) within the range 10°C to 25°C, with said aqueous disinfecting composition, optionally diluted, and then
(ii) the drying of said product thus treated.

11. The use of a composition according to any one of claims 1 to 7 for the depollution of industrial mining sites in order to prevent acid generation and/or to destroy cyanides.

**Patentansprüche**

1. Wässerige Dekontaminierungslösung, die $H_2O_2$ und einen Silberbestandteil in saurem Milieu enthält, dadurch gekennzeichnet, daß sie enthält:

(A) $H_2O_2$ in einer Menge, die geringer oder gleich 60 % des Gesamtgewichts der Lösung ist;
(B) eine Mischung $RCO_3H/RCO_2H$, wobei R Methyl oder Ethyl entspricht, in einer Menge, so daß das Gewichtsverhältnis dieser Mischung zu dem Wasserstoffperoxid zwischen 0,15/1 und 0,85/1 beträgt;
(C) einen Silberbestandteil als Quelle für $Ag^+$-Ionen, ausgewählt aus der Gruppe bestehend aus den Salzen und den Komplexverbindungen des Silbers, wobei der Silberbestandteil in einer Menge enthalten ist, so daß das Gewichtsverhältnis des Silberbestandteils zu dem Wasserstoffperoxid zwischen 0,0005/1 und 0,015/1 beträgt;
(D) ein Stabilisator in einer Menge, so daß das Gewichtsverhältnis des Stabilisators zu dem Wasserstoffperoxid zwischen 0,0005/1 und 0,025/1 beträgt; und

Wasser als Zugabe bis zu 100 % des Gewichts.

2. Lösung nach Anspruch 1, dadurch gekennzeichnet, daß sie außerdem mindestens einen Bestandteil enthält, ausgewählt aus der Gruppe bestehend aus den

(E) Tensiden;
(F) Antikorrosionsmitteln; und
(G) Parfüm.

3. Lösung nach Anspruch 1, dadurch gekennzeichnet, daß das Gewichtsverhältnis des Silberbestandteils zu dem Wasserstoffperoxid zwischen 0,0008/1 und 0,005/1 beträgt.

4. Lösung nach Anspruch 1, dadurch gekennzeichnet, daß das Gewichtsverhältnis des Stabilisators zu dem Wasserstoffperoxid zwischen 0,0008/1 und 0,005/1 beträgt.

5. Lösung nach Anspruch 1, dadurch gekennzeichnet, daß sie außerdem enthält:

(E) ein Tensid in einer Menge, so daß das Gewichtsverhältnis des Tensids zu dem Wasserstoffperoxid zwischen 0,00005/1 und 0,01/1 und vorzugsweise im Größenbereich von 0,005/1 beträgt;
(F) ein Antikorrosionsmittel in einer Menge, so daß das Gewichtsverhältnis des Antikorrosionsmittels zu dem Wasserstoffperoxid zwischen 0,00005/1 und 0,03/1 und vorzugsweise zwischen 0,001/1 und 0,005/1 beträgt; und/oder
(G) ein Parfüm in einer geringeren oder gleichen Menge wie das vorstehende Antikorrosionsmittel.

6. Lösung nach Anspruch 1, dadurch gekennzeichnet, daß sie enthält:

(A) 1,5 bis 8 % in Gewichtsanteilen an $H_2O_2$;
(B) 0,75 bis 5,6 % in Gewichtsanteilen einer Mischung aus $RCO_3H$ und $RCO_2H$, wobei R Ethyl oder vorzugsweise Methyl entspricht;
(C) 0,0012 bis 0,04 % in Gewichtsanteilen eines Silberbestandteils, ausgewählt aus den Komplexverbindungen und den Salzen des Silbers, als Quelle für $Ag^+$-Ionen;
(D) 0,0012 bis 0,04 % in Gewichtsanteilen an $H_3PO_4$;

(E) gegebenenfalls 0,0075 bis 0,04 % in Gewichtsanteilen an Tensid;

(F) gegebenenfalls 0,003 bis 0,04 % in Gewichtsanteilen an Antikorrosionsmittel;

(G) gegebenenfalls ein Parfüm; und

Wasser als Zugabe bis zu 100 % des Gewichts.

**7.** Lösung nach den Ansprüchen 1 oder 6, dadurch gekennzeichnet, daß sie enthält

(A) 7,5 bis 8 % in Gewichtsanteilen an $H_2O_2$;

(B) 4,5 bis 4,8 % in Gewichtsanteilen einer Mischung $CH_3CO_3H + CH_3CO_2H$;

(C) 0,008 % in Gewichtsanteilen an $AgNO_3$;

(D) 0,008 % in Gewichtsanteilen an $H_3PO_4$; und

Wasser als Zugabe bis zu 100 % des Gewichts.

**8.** Verfahren zur Herstellung einer wässerigen Dekontaminierungslösung nach Anspruch 1, dadurch gekennzeichnet, daß es folgende Schritte enthält:

(1.) Herstellen einer wässerigen Lösung des Silberbestandteils, der als Quelle für $Ag^+$-Ionen dient;

(2.) Zugabe des Stabilisators in die so erhaltene Lösung;

(3.) Zugabe der erhaltenen Lösung in das Wasserstoffperoxid oder Zugabe des Wasserstoffperoxids in die erhaltene Lösung;

(4.) Zugabe einer sauren Substanz, ausgewählt aus der Gruppe bestehend aus $RCO_3H$, $RCO_2H$ und ihren Mischungen $RCO_3H + RCO_2H$, in die erhaltene Lösung;

(5.) Ruhenlassen der erhaltenen Lösung bis das Gleichgewicht

$$H_2O_2 + RCO_2H \leftrightarrow RCO_3H + H_2O$$

sich ausgebildet hat; und

(6.) Zugabe von Wasser bis zu 100 % des Gewichts.

**9.** Verfahren nach Anspruch 8 zur Herstellung einer wässerigen Dekontaminierungslösung nach Anspruch 7, die 7,5 bis 8 % in Gewichtsanteilen an $H_2O_2$ enthält, dadurch gekennzeichnet, daß es folgende Schritte enthält:

(1.) Herstellen einer Lösung von $AgNO_3$ in einem Teil der Gesamtmenge des Wassers, die zur Herstellung der wässerigen Desinfektionslösung erforderlich ist;

(2.) Zugabe einer wässerigen Lösung von Phosphorsäure mit 85 % in Gewichtsanteilen an $H_3PO_4$ in die so erhaltene Lösung;

(3.) Zugabe der so erhaltenen Lösung in eine wässerige Lösung von Wasserstoffperoxid mit 50 bis 60 % in Gewichtsanteilen an $H_2O_2$, unter Rühren, bei einer Temperatur zwischen 0° C und 25° C und vorzugsweise bei einer Temperatur zwischen 4° C und 15° C und mit einer Zugabemenge der in Schritt (2.) erhaltenen Lösung zwischen 3 und 6 l/h;

(4.) Zugabe der sauren Substanz $CH_3CO_2H$ in die so erhaltene Lösung, unter Rühren, bei einer Temperatur zwischen 0° C und 25° C und vorzugsweise bei einer Temperatur zwischen 4° C und 15° C und mit einer Zugabemenge der sauren Substanz $CH_3CO_2H$ zwischen 3 und 6 l/h;

(5.) Ruhenlassen der so erhaltenen Lösung während 48 h im Dunkeln bei einer Temperatur zwischen 0° C und 25° C und vorzugsweise bei einer Temperatur zwischen 4° C und 15° C, damit das Gleichgewicht

$$H_2O_2 + CH_3CO_2H \leftrightarrow CH_3CO_3H + H_2O$$

sich ausbildet, und

(6.) Zugabe des restlichen Wassers bis zu 100 % des Gewichts.

**10.** Verwendung einer Lösung nach einem beliebigen der Ansprüche 1 bis 7 zur Desinfektion oder für die Hygiene von geschlossenen Räumen, Oberflächen aus verschiedenen Materialien, Instrumenten, Nahrungsmitteln, Ernten, Kulturen auf dem offenen Feld oder Gewächshauskulturen, Behältern, Leitungsrohren und Trinkwasser, dadurch gekennzeichnet, daß sie umfaßt:

(i) eine Behandlung der Oberfläche oder des Rauminhalts eines zu desinfizierenden oder zu dekontaminierenden Produktes mit der, gegebenenfalls verdünnten, wässerigen Desinfektionslösung bei einer Temperatur zwischen 0° C und 50° C, vorzugsweise bei Umgebungstemperatur (RT) im Bereich von 10° C bis 25° C; und darauf

(ii) das Trocknen des so behandelten Produktes.

11. Verwendung einer Lösung nach einem beliebigen der Ansprüche 1 bis 7 für die Beseitigung von Verschmutzung von Geländen der Bergbauindustrie, um die Säurebildung zu verhindern und/oder die Cyanide zu zerstören.